# EUROPEAN PATENT APPLICATION

(11) **EP 4 723 663 A1**
(43) Date of publication of application: **08.04.2026**
(21) Application number: 24814970.0
(22) Date of filing: 03.04.2024
(51) Int. Cl.: H04N 25/47, H04N 25/60

(54) **IMAGING DEVICE AND IMAGING METHOD**

(30) Priority: 29.05.2023 JP 2023087588
(71) Applicant: Sony Semiconductor Solutions Corporation, Atsugi-shi, Kanagawa 243-0014 (JP)
(72) Inventor: MOCHIZUKI, Futa, Atsugi-shi, Kanagawa 243-0014 (JP); TAKAMIYA, Kenichi, Atsugi-shi, Kanagawa 243-0014 (JP); XIE, Kan, Atsugi-shi, Kanagawa 243-0014 (JP)
(74) Representative: Müller Hoffmann & Partner
(86) International application number: PCT/JP2024/013832
(87) International publication number: WO 2024/247483

(57) **Abstract**

To cancel noise without deleting an event to be detected.

An imaging device includes a signal detection unit that detects a first pixel signal, and an event detection unit that detects an event signal on the basis of the first pixel signal and a second pixel signal. A noise detection unit that detects noise on the basis of the first pixel signal and a noise removal unit that removes the noise detected by the noise detection unit from the event signal may be further included. The noise detection unit may include a flicker detection unit that detects a flicker signal on the basis of the first pixel signal, and the noise removal unit may include a flicker removal unit that removes the flicker signal detected by the flicker detection unit from the event signal.

## Description

### TECHNICAL FIELD

The present technology relates to an imaging device and an imaging method. Specifically, the present technology relates to an imaging device and an imaging method capable of noise cancellation.

### BACKGROUND ART

An imaging device may be used as a dynamic vision sensor (DVS) that detects an event signal indicating a change in the amount of received light for each pixel. For example, in order to prevent an unnecessary event from occurring, an imaging device that detects whether or not a detection signal caused by flicker of a light source is included has been proposed (see, for example, Patent Document 1).

### CITATION LIST

### PATENT DOCUMENT

Patent Document 1: WO 2021/200523 A

### SUMMARY OF THE INVENTION

### PROBLEMS TO BE SOLVED BY THE INVENTION

However, in the above-described conventional technology, in a case where the detection signal caused by flicker of a light source is included, all the events may be deleted in post-processing, and there is a possibility that the event to be detected is lost.

The present technology has been made in view of such a situation, and an object thereof is to enable noise cancellation without deleting an event to be detected.

### SOLUTIONS TO PROBLEMS

The present technology has been made to solve the above-described problems, and a first aspect thereof is an imaging device including a signal detection unit that detects a first pixel signal, and an event detection unit that detects an event signal on the basis of the first pixel signal and a second pixel signal. This brings about an effect that the event signal can be corrected on the basis of the first pixel signal and the event signal is detected on the basis of the second pixel signal.

Furthermore, in the first aspect, a noise detection unit that detects noise on the basis of the first pixel signal, and a noise removal unit that removes the noise detected by the noise detection unit from the event signal may be further included. This brings about an effect that the noise detected on the basis of the first pixel signal is removed from the event signal detected on the basis of the second pixel signal.

Furthermore, in the first aspect, the noise detection unit may include a flicker detection unit that detects a flicker signal on the basis of the first pixel signal, and the noise removal unit may include a flicker removal unit that removes the flicker signal detected by the flicker detection unit from the event signal. This brings about an effect that the flicker detected on the basis of the first pixel signal is removed from the event signal detected on the basis of the second pixel signal.

Furthermore, in the first aspect, a bias generation unit that generates a bias signal used to detect the event signal may be further included. This brings about an effect that the event signal is detected on the basis of the bias signal.

Furthermore, in the first aspect, the signal detection unit may include a monitor pixel that outputs the flicker signal, the event detection unit may include an event pixel that outputs the event signal on the basis of the bias signal, and the flicker removal unit may cancel a flicker signal included in the event signal on the basis of the flicker signal output from the monitor pixel. This brings about an effect that the flicker signal included in the event signal is canceled on the basis of the flicker signal included in the output of the monitor pixel.

Furthermore, in the first aspect, the flicker removal unit may apply a flicker signal output from the monitor pixel to a buffer bias signal line used for buffering the second pixel signal, and cancel the flicker signal included in the event signal. This brings about an effect that the flicker signal included in the event signal is canceled on the basis of the bias signal used for detecting the event signal.

Furthermore, in the first aspect, the flicker removal unit may apply a flicker signal output from the monitor pixel to a logarithmic bias signal line used for logarithmic conversion of the second pixel signal, and cancel the flicker signal included in the event signal. This brings about an effect that the flicker signal included in the event signal is canceled on the basis of the bias signal used for detecting the event signal.

Furthermore, in the first aspect, the flicker removal unit may apply a flicker signal output from the monitor pixel to a differential bias signal line used for differentiation of the second pixel signal, and cancel the flicker signal included in the event signal. This brings about an effect that the flicker signal included in the event signal is canceled on the basis of the bias signal used for detecting the event signal.

Furthermore, in the first aspect, the flicker removal unit may apply a flicker signal output from the monitor pixel to a current mirror bias signal line used for generating the bias signal, and cancel the flicker signal included in the event signal. This brings about an effect that the flicker signal included in the event signal is canceled on the basis of the bias signal used for detecting the event signal.

Furthermore, in the first aspect, the flicker removal unit may control a current used for generating the bias signal on the basis of the flicker signal output from the monitor pixel, and cancel the flicker signal included in the event signal. This brings about an effect that the flicker signal included in the event signal is canceled on the basis of the bias signal used for detecting the event signal.

Furthermore, in the first aspect, the flicker removal unit may include a logarithmic conversion unit that logarithmically converts a current, and control the current on the basis of a flicker signal output from the monitor pixel, and cancel the flicker signal included in the event signal. This brings about an effect that the flicker signal included in the event signal is canceled on the basis of the flicker signal included in the output of the monitor pixel.

Furthermore, in the first aspect, a buffer connected to a subsequent stage of the monitor pixel may be included. This brings about an effect that the driving force for canceling the flicker signal included in the event signal is secured.

Furthermore, in the first aspect, a pixel array unit in which the event pixels are arranged in an array may be further included, the bias generation unit may include a plurality of bias generation units corresponding to a plurality of areas into which the pixel array unit is divided, and the flicker removal unit may include a plurality of flicker removal units corresponding to the plurality of bias generation units. This brings about an effect that the flicker signal is canceled according to the non-uniformity of the flicker received by the pixel array unit for each area.

Furthermore, in the first aspect, the flicker removal unit may apply a flicker signal output from the monitor pixel to different bias signal lines used for detecting the event signal, and cancel the flicker signal included in the event signal. This brings about an effect that the flicker signal is canceled according to the non-uniformity of the flicker received by the pixel array unit.

Furthermore, in the first aspect, the event pixel may include: a photoelectric conversion unit; a logarithmic conversion unit that logarithmically converts an output of the photoelectric conversion unit; a buffer that delivers an output of the logarithmic conversion unit; a differentiator that differentiates an output of the logarithmic conversion unit transferred via the buffer; and a comparator that compares an output of the differentiator. This brings about an effect that an event is detected in the event pixel while enabling detection of the same voltage change according to the setting of the luminance change rate at any illuminance.

Furthermore, in the first aspect, an output of the monitor pixel may be an added value of outputs of logarithmic conversion units of a plurality of photoelectric conversion units. This brings about an effect that the flicker signal included in the event signal is canceled on the basis of the flicker signal included in the output of the monitor pixel.

Furthermore, in the first aspect, an output of the monitor pixel may be an added value of outputs of buffers of a plurality of photoelectric conversion units. This brings about an effect that the flicker signal included in the event signal is canceled on the basis of the flicker signal included in the output of the monitor pixel.

Furthermore, in the first aspect, a photoelectric conversion unit shared by the monitor pixel and the event pixel, and a switching unit that switches whether the photoelectric conversion unit is used for the monitor pixel or the event pixel may further be included. This brings about an effect that monitor output and event output can be achieved while reducing the number of photoelectric conversion units.

Furthermore, in the first aspect, the event pixel may be used as the monitor pixel. This brings about an effect that the flicker signal included in the event signal is canceled on the basis of the flicker signal included in the output of the event pixel.

Furthermore, a second aspect is an imaging method including: detecting a first pixel signal; and detecting an event signal on the basis of the first pixel signal and a second pixel signal. This brings about an effect that the event signal can be corrected on the basis of the first pixel signal and the event signal is detected on the basis of the second pixel signal.

### BRIEF DESCRIPTION OF DRAWINGS

Fig. 1 is a block diagram illustrating a configuration example of an imaging device according to a first embodiment.
Fig. 2 is a block diagram illustrating a configuration example of a solid-state imaging device according to the first embodiment.
Fig. 3 is a diagram illustrating a configuration example of an anti-flicker unit according to the first embodiment.
Fig. 4 is a diagram illustrating a configuration example of an anti-flicker unit according to a second embodiment.
Fig. 5 is a diagram illustrating a configuration example of an anti-flicker unit according to a third embodiment.
Fig. 6 is a diagram illustrating a configuration example of an anti-flicker unit according to a fourth embodiment.
Fig. 7 is a diagram illustrating a configuration example of an anti-flicker unit according to a fifth embodiment.
Fig. 8 is a diagram illustrating a configuration example of an anti-flicker unit according to a sixth embodiment.
Fig. 9 is a block diagram illustrating a configuration example of a solid-state imaging device according to a seventh embodiment.
Fig. 10 is a diagram illustrating a configuration example of a monitor pixel according to an eighth embodiment.
Fig. 11 is a diagram illustrating a configuration example of a monitor pixel according to a ninth embodiment.
Fig. 12 is a diagram illustrating a configuration example of a monitor pixel according to a 10th embodiment.
Fig. 13 is a block diagram illustrating a configuration example of a solid-state imaging device according to an 11th embodiment.
Fig. 14 is a diagram illustrating a configuration example of an anti-flicker unit according to the 11th embodiment.
Fig. 15 is a diagram illustrating a configuration example of a pixel according to a 12th embodiment.
Fig. 16 is a block diagram illustrating a configuration example of a solid-state imaging device according to a 13th embodiment.
Fig. 17 is a block diagram illustrating a configuration example of a solid-state imaging device according to a 14th embodiment.
Fig. 18 is a diagram illustrating a configuration example of an event pixel according to the 14th embodiment.
Fig. 19 is a diagram illustrating a configuration example of a monitor pixel according to the 15th embodiment.
Fig. 20 is a perspective view illustrating a configuration example of a pixel array unit according to a 16th embodiment.
Fig. 21 is a block diagram illustrating a schematic configuration example of a vehicle control system.
Fig. 22 is an explanatory diagram illustrating an example of an installation position of an imaging section.

### MODE FOR CARRYING OUT THE INVENTION

Modes for carrying out the present technology (hereinafter referred to as embodiments) will be described below. The description will be given in the following order.
1. First embodiment (example of canceling a flicker signal included in an event signal by applying a flicker signal to a buffer bias signal line)
2. Second embodiment (example of canceling a flicker signal included in an event signal by applying a flicker signal to a logarithmic bias signal line)
3. Third embodiment (example of canceling a flicker signal included in an event signal by applying a flicker signal to a differential bias signal line)
4. Fourth embodiment (example of canceling a flicker signal included in an event signal by applying a flicker signal to a current mirror bias signal line)
5. Fifth embodiment (example of canceling a flicker signal included in an event signal by controlling a current used for generating a bias signal on the basis of a flicker signal detected from an output of a monitor pixel)
6. Sixth embodiment (example of canceling a flicker signal included in an event signal by controlling a current of a logarithmic conversion unit provided in a flicker removal unit)
7. Seventh embodiment (example of providing monitor pixels in a pixel array unit)
8. Eighth embodiment (example of setting an added value of outputs of logarithmic conversion units of a plurality of photoelectric conversion units as an output of a monitor pixel)
9. Ninth embodiment (example of setting an added value of outputs of buffers of a plurality of photoelectric conversion units as an output of a monitor pixel)
10. 10th embodiment (example of providing a buffer in a monitor pixel)
11. 11th embodiment (example of using an event pixel as a monitor pixel)
12. 12th embodiment (example of switching an output of a photoelectric conversion unit shared between a monitor pixel and an event pixel)
13. 13th embodiment (example of providing a plurality of bias generation units and a plurality of flicker removal units corresponding to a plurality of areas into which a pixel array unit is divided)
14. 14th embodiment (example of canceling a flicker signal included in an event signal by applying a flicker signal to different bias signal lines used for detecting an event signal)
15. 15th embodiment (example of making a configuration of a monitor pixel equal to a configuration of an event pixel)
16. 16th embodiment (example of stacking pixel array units)
17. Application example to mobile body

### <1. First Embodiment>

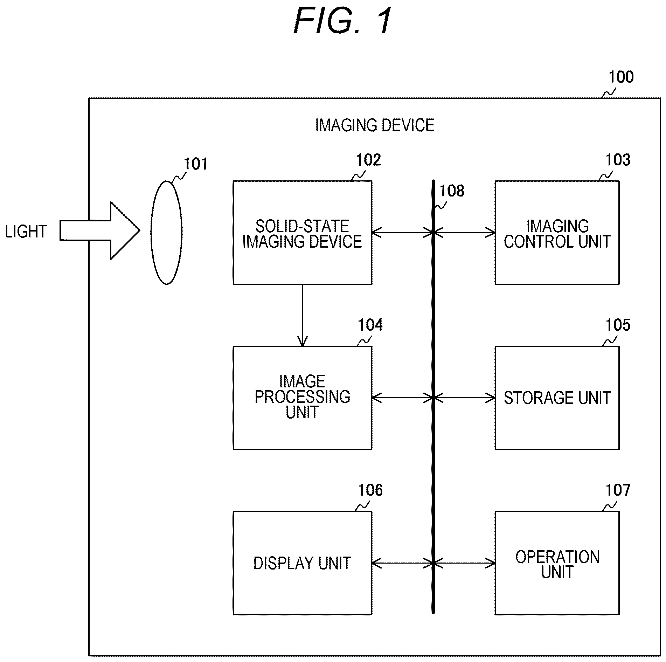

Fig. 1 is a diagram illustrating a configuration example of an imaging device according to a first embodiment.

In the drawing, an imaging device 100 includes an optical system 101, a solid-state imaging device 102, an imaging control unit 103, an image processing unit 104, a storage unit 105, a display unit 106, and an operation unit 107. The imaging control unit 103, the image processing unit 104, the storage unit 105, the display unit 106, and the operation unit 107 are interconnected via a bus 108. Note that the imaging device 100 may be used alone, may be incorporated in a portable terminal such as a smartphone, may be incorporated in an authentication device or a monitoring device, or may be incorporated in an electric vehicle (EV) or a drone.

The optical system 101 causes light from a subject to enter the solid-state imaging device 102, and forms an image of the subject on a light-receiving surface of the solid-state imaging device 102. The optical system 101 can include, for example, a focus lens, a zoom lens, a diaphragm, and the like. The optical system 101 may include a plurality of lenses such as a wide-angle lens, a standard lens, and a telephoto lens.

The solid-state imaging device 102 converts light from the subject into an electric signal for each pixel, and digitizes and outputs the electric signal. At this time, the solid-state imaging device 102 can output an event signal in which a change in the luminance of the incident light in the same direction is detected as an event on the basis of the pixel signal generated in the pixel. Here, the solid-state imaging device 102 can detect a flicker signal from the incident light and remove the flicker signal from the event signal. At this time, the solid-state imaging device 102 can be provided with an event pixel that outputs an event signal and a monitor pixel that outputs a flicker signal. Then, the solid-state imaging device 102 can cancel the flicker signal included in the event signal on the basis of the flicker signal output from the monitor pixel.

The imaging control unit 103 controls the imaging by the solid-state imaging device 102 on the basis of a command from the operation unit 107. At this time, the imaging control unit 103 can control the exposure time, the exposure amount, the imaging timing, and the like of the solid-state imaging device 102.

The image processing unit 104 performs image processing on the basis of the output from the solid-state imaging device 102. The image processing unit 104 may include a processor that executes processing on the basis of software.

The storage unit 105 stores a captured image captured by the solid-state imaging device 102, and stores imaging parameters and the like of the solid-state imaging device 102. Furthermore, the storage unit 105 can store a program for operating the imaging device 100 on the basis of software. The storage unit 105 may include a read only memory (ROM), a random access memory (RAM), and a memory card.

The display unit 106 displays a captured image and an event and displays various types of information supporting the imaging operation. The display unit 106 may be a liquid crystal display or an organic electro luminescence (EL) display.

The operation unit 107 provides a user interface for operating the imaging device 100. The operation unit 107 may include, for example, a button, a dial, and a switch provided in the imaging device 100. The operation unit 107 may include a touch panel together with the display unit 106.

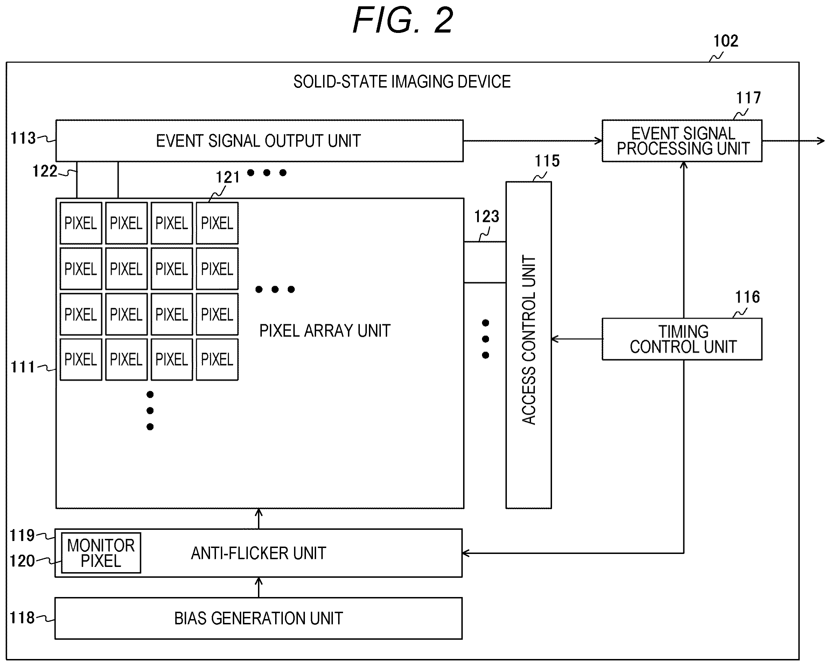

Fig. 2 is a block diagram illustrating a configuration example of the solid-state imaging device according to the first embodiment.

In the drawing, the solid-state imaging device 102 includes a pixel array unit 111, an event signal output unit 113, an access control unit 115, a timing control unit 116, an event signal processing unit 117, a bias generation unit 118, and an anti-flicker unit 119.

In the pixel array unit 111, event pixels 121 are arranged in an array. At this time, the event pixels 121 may be arranged in a matrix in the row direction and the column direction. The event pixel 121 outputs an event signal. The event signal is a signal indicating, as an event, a change in luminance of the incident light in the same direction. Note that a photodiode or a single photon avalanche diode (SPAD) may be provided as a photoelectric conversion unit of the event pixel 121. The event pixels 121 may be driven row by row via horizontal control lines 123. The event pixels 121 can output signals for each column via vertical signal lines 122.

The event signal output unit 113 outputs the event signal output from the event pixel 121 in a predetermined format. For example, the event signal output unit 113 may digitize and output the event signal output from the event pixel 121.

The access control unit 115 controls access to the event pixel 121 via the horizontal control line 123. At this time, the access control unit 115 can drive the event pixel 121 row by row via the horizontal control lines 123.

The timing control unit 116 can control timings such as exposure, reading, selection, and reset for the event pixel 121. Furthermore, the timing control unit 116 can control the timing at which the bias signal generated by the bias generation unit 118 is applied to the event pixel 121 and the timing at which the flicker signal generated on the basis of the output of a monitor pixel 120 is applied to the event pixel 121.

The event signal processing unit 117 processes the event signal output from the event pixel 121. For example, the event signal processing unit 117 may perform contour enhancement processing or the like.

The bias generation unit 118 generates a bias signal used for detecting an event signal output from the event pixel 121. The bias signal may include a buffer bias signal used to buffer the pixel signal generated by the event pixel 121. Furthermore, the bias signal may include a logarithmic bias signal used for logarithmic conversion of the pixel signal generated by the event pixel 121. Furthermore, the bias signal may include a differential bias signal used for differentiation of the pixel signal generated by the event pixel 121.

The anti-flicker unit 119 includes the monitor pixel 120. The monitor pixel 120 can output a flicker signal on the basis of a pixel signal detected by the monitor pixel 120. The monitor pixel 120 is preferably arranged in the vicinity of the pixel array unit 111. There can be one or more than one monitor pixel 120. Note that the monitor pixel 120 is an example of a signal detection unit described in the claims.

At this time, the anti-flicker unit 119 can detect the flicker signal on the basis of the output from the monitor pixel 120. Then, the anti-flicker unit 119 can cancel the flicker signal included in the event signal output from the event pixel 121 on the basis of the flicker signal generated on the basis of the output of the monitor pixel 120. For example, the anti-flicker unit 119 can apply a flicker signal generated on the basis of the output of the monitor pixel 120 to a buffer bias signal line to cancel the flicker signal included in the event signal output from the event pixel 121.

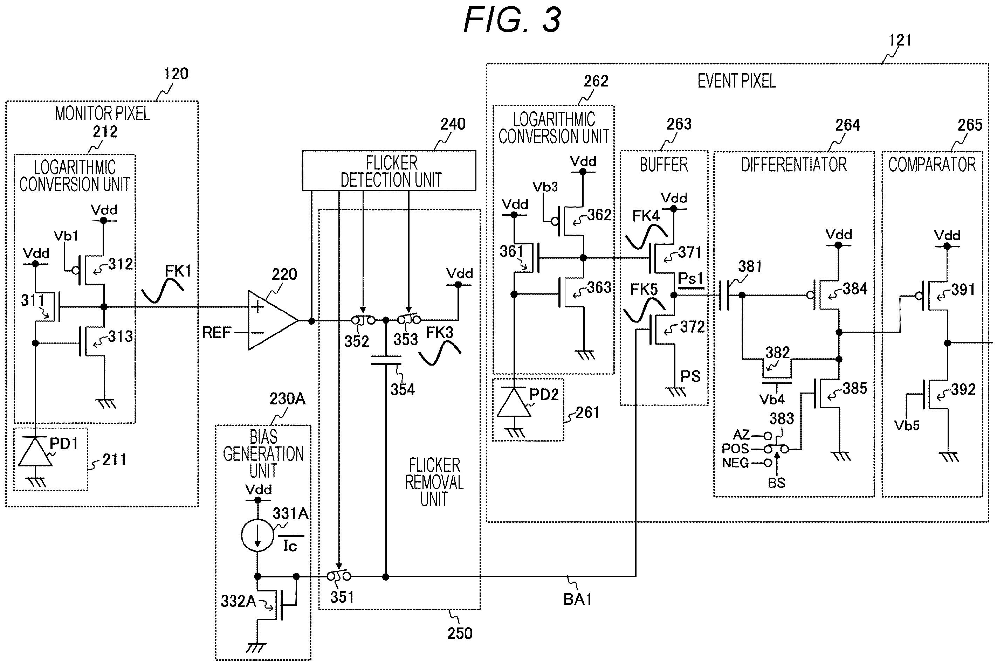

Fig. 3 is a diagram illustrating a configuration example of an anti-flicker unit according to the first embodiment. Note that in the drawing, the event pixel 121 and a bias generation unit 230A are also illustrated in addition to the anti-flicker unit 119 in order to facilitate understanding of the connection relationship.

In the drawing, the event pixel 121 includes a photoelectric conversion unit 261, a logarithmic conversion unit 262, a buffer 263, a differentiator 264, and a comparator 265. Note that the event pixel 121 is an example of an event detection unit described in the claims.

The photoelectric conversion unit 261 converts incident light into an electric signal. The photoelectric conversion unit 261 can include a photodiode PD2.

The logarithmic conversion unit 262 logarithmically converts the output of the photoelectric conversion unit 261. By logarithmically converting the output of the photoelectric conversion unit 261, the same luminance change rate can be converted into the same voltage change at any illuminance. The logarithmic conversion unit 262 is connected to a subsequent stage of the photoelectric conversion unit 261. The logarithmic conversion unit 262 includes N-channel field-effect transistors 361 and 363 and a P-channel field-effect transistor 362. The P-channel field-effect transistor 362 and the N-channel field-effect transistor 363 are connected in series to each other. A connection point of the P-channel field-effect transistor 362 and the N-channel field-effect transistor 363 is used as an output of the logarithmic conversion unit 262. Furthermore, a connection point of the P-channel field-effect transistor 362 and the N-channel field-effect transistor 363 is connected to the gate of the N-channel field-effect transistor 361. A bias voltage Vb3 is applied to the gate of the P-channel field-effect transistor 362. The gate of the N-channel field-effect transistor 363 is connected to the cathode of the photodiode PD2 and the source of the N-channel field-effect transistor 361. A power supply Vdd is supplied to the drains of the P-channel field-effect transistor 362 and the N-channel field-effect transistor 361.

The buffer 263 passes the output of the logarithmic conversion unit 262 to the differentiator 264. The buffer 263 is connected to a subsequent stage of the logarithmic conversion unit 262. The buffer 263 includes N-channel field-effect transistors 371 and 372. The N-channel field-effect transistors 371 and 372 are connected in series to each other. A connection point of the N-channel field-effect transistors 371 and 372 is used as an output of the buffer 263. The gate of the N-channel field-effect transistor 371 is connected to the output of the logarithmic conversion unit 262. The gate of the N-channel field-effect transistor 372 is connected to a buffer bias signal line BA1. The buffer bias signal line BA1 applies a buffer bias signal to the gate of the N-channel field-effect transistor 372. The power supply Vdd is supplied to the drain of the N-channel field-effect transistor 371.

The differentiator 264 is connected to a subsequent stage of the buffer 263. The differentiator 264 differentiates the output of the logarithmic conversion unit 262 delivered via the buffer 263. For example, the differentiator 264 can detect a change in luminance of the incident light by obtaining a difference from the current output level of the logarithmic conversion unit 262 using the past output level of the logarithmic conversion unit 262 as a reference level. Here, the differentiator 264 can detect an event (positive electrode event) in which the luminance of the incident light increases and an event (negative electrode event) in which the luminance of the incident light decreases in a time-division manner.

The differentiator 264 includes a capacitor 381, N-channel field-effect transistors 382 and 385, a P-channel field-effect transistor 384, and a switch 383. The capacitor 381 is connected between the output of the buffer 263 and the input of the differentiator 264. The P-channel field-effect transistor 384 and the N-channel field-effect transistor 385 are connected in series to each other. A connection point of the P-channel field-effect transistor 384 and the N-channel field-effect transistor 385 is used as an output of the differentiator 264. A connection point of the P-channel field-effect transistor 384 and the N-channel field-effect transistor 385 is connected to the gate of the P-channel field-effect transistor 384 via the N-channel field-effect transistor 382. The switch 383 is connected to the gate of the N-channel field-effect transistor 385. The power supply Vdd is supplied to the drain of the P-channel field-effect transistor 384.

The switch 383 switches between a reset signal AZ, a positive bias signal POS, and a negative bias signal NEG and applies the signals to the gate of the N-channel field-effect transistor 385. At this time, the switch 383 can switch between the reset signal AZ, the positive bias signal POS, and the negative bias signal NEG on the basis of a switching signal BS. The reset signal AZ, the positive bias signal POS, and the negative bias signal NEG are input to the differentiator 264 via the horizontal control line 123.

At this time, the differentiator 264 resets the reference level to the current output level of the logarithmic conversion unit 262 on the basis of the reset signal AZ. The differentiator 264 can newly detect a change in luminance of the incident light on the basis of a change in the output level of the logarithmic conversion unit 262 from the time point the reference level is reset. At this time, after the reference level is reset on the basis of the reset signal AZ, the positive bias signal POS and the negative bias signal NEG are applied to the gate of the N-channel field-effect transistor 385 in a time-division manner. As a result, the differentiator 264 can detect a change in the luminance increasing direction of the incident light and a change in the luminance decreasing direction of the incident light in a time-division manner.

The comparator 265 outputs the detection value of the differentiator 264 in a time-division manner as a change in the luminance increasing direction of the incident light and a change in the luminance decreasing direction of the incident light. The comparator 265 is connected to a subsequent stage of the differentiator 264. The comparator 265 includes a P-channel field-effect transistor 391 and an N-channel field-effect transistor 392. The P-channel field-effect transistor 391 and the N-channel field-effect transistor 392 are connected in series to each other. A connection point of the P-channel field-effect transistor 391 and the N-channel field-effect transistor 392 is used as an output of the comparator 265. A connection point of the P-channel field-effect transistor 391 and the N-channel field-effect transistor 392 is connected to the vertical signal line 122. The gate of the P-channel field-effect transistor 391 is connected to the output of the differentiator 264. A bias voltage Vb5 is applied to the gate of the N-channel field-effect transistor 392.

Here, by setting the positive bias signal POS and the negative bias signal NEG to the differentiator 264 in a time-division manner, it is possible to share the comparator 265 with respect to a change in the luminance increasing direction of the incident light and a change in the luminance decreasing direction of the incident light. Therefore, it is not necessary to separately provide the comparator 265 for each of the detection of the change in the luminance increasing direction of the incident light and the detection of the change in the luminance decreasing direction of the incident light, and the circuit scale of the comparator 265 can be reduced.

The output of the photodiode PD2 is input to the logarithmic conversion unit 262. Then, on the basis of the source follower operation in the logarithmic conversion unit 262, the output of the photodiode PD2 is subjected to logarithmic conversion and input to the differentiator 264 via the buffer 263. Then, in the differentiator 264, after the reset signal AZ is applied, the positive bias signal POS and the negative bias signal NEG are applied in a time-division manner, so that a change in the luminance increasing direction of the incident light and a change in the luminance decreasing direction of the incident light are detected in a time-division manner. Then, in the comparator 265, the positive electrode event and the negative electrode event are detected in a time-division manner on the basis of the output of the differentiator 264.

The output of the monitor pixel 120 is input to a flicker detection unit 240 and a flicker removal unit 250 via a buffer 220. The monitor pixel 120 includes a photoelectric conversion unit 211 and a logarithmic conversion unit 212.

The photoelectric conversion unit 211 converts incident light into an electric signal. The photoelectric conversion unit 211 can include a photodiode PD1.

The logarithmic conversion unit 212 logarithmically converts the output of the photoelectric conversion unit 211. The logarithmic conversion unit 212 is connected to a subsequent stage of the photoelectric conversion unit 211. The logarithmic conversion unit 212 includes N-channel field-effect transistors 311 and 313 and a P-channel field-effect transistor 312. The P-channel field-effect transistor 312 and the N-channel field-effect transistor 313 are connected in series to each other. A connection point of the P-channel field-effect transistor 312 and the N-channel field-effect transistor 313 is used as an output of the logarithmic conversion unit 212. Furthermore, a connection point of the P-channel field-effect transistor 312 and the N-channel field-effect transistor 313 is connected to the gate of the N-channel field-effect transistor 311. A bias voltage Vb1 is applied to the gate of the P-channel field-effect transistor 312. The gate of the N-channel field-effect transistor 313 is connected to the cathode of the photodiode PD1 and the source of the N-channel field-effect transistor 311. The power supply Vdd is supplied to the drains of the P-channel field-effect transistor 312 and the N-channel field-effect transistor 311.

The buffer 220 passes the output of the monitor pixel 120 to the flicker removal unit 250. A non-inverting input of the buffer 220 is connected to the output of the monitor pixel 120. A reference signal REF is applied as an inverting input of the buffer 220. The output of the buffer 220 is connected to the flicker detection unit 240 and the flicker removal unit 250.

The bias generation unit 118 includes a bias generation unit 230A. The bias generation unit 230A can generate a buffer bias signal on the basis of the current mirror operation. The flicker removal unit 250 is connected to a subsequent stage of the bias generation unit 230A. The bias generation unit 230A includes a current source 331A and an N-channel field-effect transistor 332A. The current source 331A and the N-channel field-effect transistor 332A are connected in series to each other. The gate of the N-channel field-effect transistor 332A is connected to the drain of the N-channel field-effect transistor 332A. The current source 331A outputs a constant current Ic.

The anti-flicker unit 119 includes the flicker detection unit 240 and the flicker removal unit 250 in addition to the monitor pixel 120.

The flicker detection unit 240 detects a flicker signal on the basis of the output of the monitor pixel 120. At this time, the flicker detection unit 240 can detect the flicker signal on the basis of the frequency of a periodic signal included in the output of the monitor pixel 120. Note that the flicker detection unit 240 is an example of a noise detection unit described in the claims.

The flicker removal unit 250 removes the flicker signal detected by the flicker detection unit 240 from the event signal detected by the event pixel 121. At this time, the flicker removal unit 250 can apply the flicker signal generated on the basis of the output of the monitor pixel 120 to the buffer bias signal line BA1 to cancel the flicker signal included in the event signal.

The flicker removal unit 250 includes switches 351 to 353 and a capacitor 354. The switch 351 connects the output of the bias generation unit 230A to the gate of the N-channel field-effect transistor 372 via the buffer bias signal line BA1. The switches 352 and 353 are connected in series to each other. A connection point of the switches 352 and 353 is connected to the gate of the N-channel field-effect transistor 372 via the capacitor 354. The other end of the switch 352 is connected to the output of the buffer 220. The other end of the switch 353 is connected to the power supply Vdd. Note that the flicker removal unit 250 is an example of a noise removal unit described in the claims.

At this time, the flicker detection unit 240 performs switching control of the switches 351 to 353 on the basis of the detection result of the flicker signal. For example, in a case where the flicker signal is detected, the flicker detection unit 240 turns on the switch 352 and turns off the switches 351 and 353. On the other hand, in a case where the flicker signal is not detected, the flicker detection unit 240 turns off the switch 352 and turns on the switches 351 and 353.

When a flicker occurs in the event pixel 121, a signal reflecting the flicker is output from the photoelectric conversion unit 261 and applied to the gate of the N-channel field-effect transistor 371 via the logarithmic conversion unit 262. At this time, the signal applied to the gate of the N-channel field-effect transistor 371 includes a flicker signal FK4.

Furthermore, when a flicker occurs in the event pixel 121, the flicker is detected by the monitor pixel 120, and a flicker signal FK1 is input to the buffer 220. The flicker signal FK1 input to the buffer 220 is input to the flicker detection unit 240, and the flicker is detected by the flicker detection unit 240. When detecting the flicker, the flicker detection unit 240 turns on the switch 352 and turns off the switches 351 and 353.

In addition, when the flicker signal FK1 is input to the buffer 220, a flicker signal FK3 is input to the flicker removal unit 250 via the buffer 220. Then, it is assumed that the flicker signal FK3 is input to the flicker removal unit 250 when the switch 352 is turned on and the switches 351 and 353 are turned off. At this time, a flicker signal FK5 is applied to the gate of the N-channel field-effect transistor 372 via the switch 352, the capacitor 354, and the buffer bias signal line BA1 sequentially.

Here, the frequency, amplitude, and phase of the flicker signal FK5 are substantially equal to the frequency, amplitude, and phase of the flicker signal FK4. Therefore, the flicker signal FK4 included in the event signal detected by the event pixel 121 is canceled on the basis of the flicker signal FK5 according to the output from the monitor pixel 120. Therefore, an event signal Ps1 from which the flicker signal FK4 has been removed is output from the buffer 263. Here, the event signal Ps1 can be output from the event pixel 121 while maintaining the signal components included in the event signal Ps1 other than the flicker signal FK4, and disappearance of the event to be detected in the event pixel 121 can be prevented.

Thus, in the first embodiment described above, the flicker signal included in the event signal detected by the event pixel 121 is canceled by applying the flicker signal corresponding to the output from the monitor pixel 120 to the buffer bias signal line BA1. As a result, it is possible to cancel the flicker signal when the event signal is detected in the event pixel 121, and prevent the occurrence of the event caused by the flicker while preventing the disappearance of the event to be detected in the event pixel 121.

### <2. Second Embodiment>

In the first embodiment described above, the flicker signal included in the event signal is canceled by applying the flicker signal to the buffer bias signal line BA1. In a second embodiment, the flicker signal included in the event signal is canceled by applying the flicker signal to a logarithmic bias signal line.

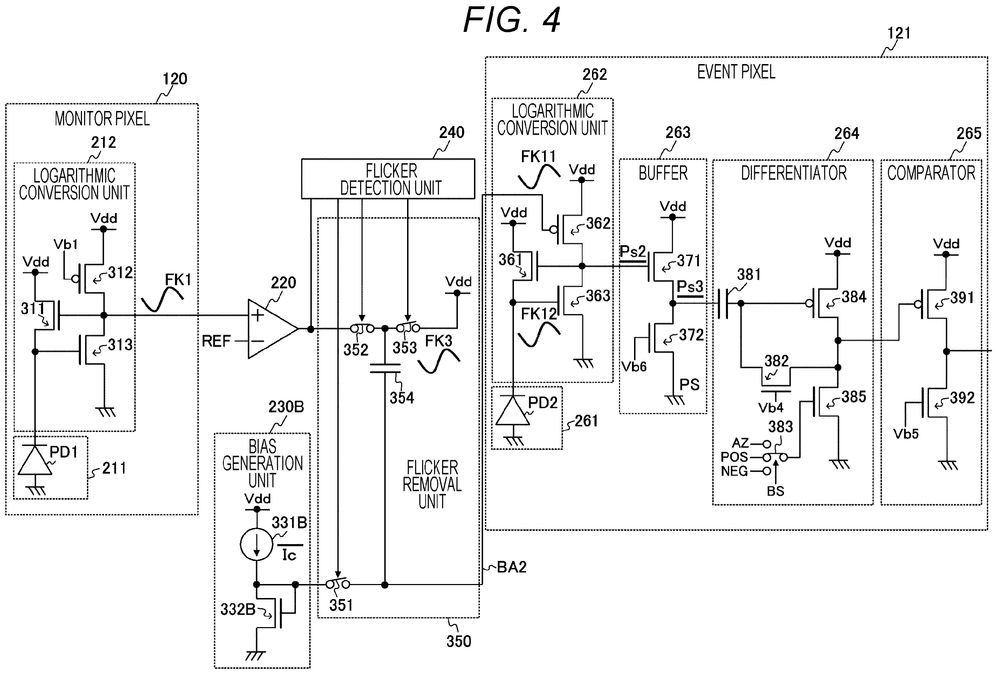

Fig. 4 is a diagram illustrating a configuration example of an anti-flicker unit according to the second embodiment.

In the drawing, the anti-flicker unit includes a flicker removal unit 350 instead of the flicker removal unit 250 of the first embodiment described above. Other configurations of the anti-flicker unit of the second embodiment are similar to those of the anti-flicker unit of the first embodiment described above.

A bias generation unit 118 includes a bias generation unit 230B. The bias generation unit 230B can generate a logarithmic bias signal on the basis of the current mirror operation. The flicker removal unit 350 is connected to a subsequent stage of the bias generation unit 230B. The bias generation unit 230B includes a current source 331B and an N-channel field-effect transistor 332B. The current source 331B and the N-channel field-effect transistor 332B are connected in series to each other. The gate of the N-channel field-effect transistor 332B is connected to the drain of the N-channel field-effect transistor 332B. The current source 331B outputs a constant current Ic.

The flicker removal unit 350 removes the flicker signal detected by a flicker detection unit 240 from the event signal detected by an event pixel 121. At this time, the flicker removal unit 350 can apply the flicker signal output from a monitor pixel 120 to a logarithmic bias signal line BA2 to cancel the flicker signal included in the event signal.

The flicker removal unit 350 can be configured similarly to the flicker removal unit 250. Note, however, that a switch 351 connects the output of the bias generation unit 230B to the gate of a P-channel field-effect transistor 362 via the logarithmic bias signal line BA2.

When a flicker occurs in the event pixel 121, a signal reflecting the flicker is output from a photoelectric conversion unit 261 and applied to the gate of an N-channel field-effect transistor 363. At this time, the signal applied to the gate of the N-channel field-effect transistor 363 includes a flicker signal FK12.

Furthermore, when a flicker occurs in the event pixel 121, the flicker is detected by the monitor pixel 120, and a flicker signal FK1 is input to the buffer 220. The flicker signal FK1 input to the buffer 220 is input to the flicker detection unit 240, and the flicker is detected by the flicker detection unit 240. When detecting the flicker, the flicker detection unit 240 turns on the switch 352 and turns off the switches 351 and 353.

In addition, when the flicker signal FK1 is input to the buffer 220, a flicker signal FK3 is input to the flicker removal unit 350 via the buffer 220. Then, it is assumed that the flicker signal FK3 is input to the flicker removal unit 350 when the switch 352 is turned on and the switches 351 and 353 are turned off. At this time, a flicker signal FK11 is applied to the gate of the P-channel field-effect transistor 362 via the switch 352, a capacitor 354, and the logarithmic bias signal line BA2 sequentially.

Here, the frequency, amplitude, and phase of the flicker signal FK11 are substantially equal to the frequency, amplitude, and phase of the flicker signal FK12. Therefore, the flicker signal FK12 included in the event signal detected by the event pixel 121 is canceled on the basis of the flicker signal FK11 generated on the basis of the output of the monitor pixel 120. Therefore, an event signal Ps2 from which the flicker signal FK12 has been removed is output from the logarithmic conversion unit 262, and an event signal Ps3 corresponding to the level variation of the event signal Ps2 is output from the buffer 263. Here, the event signal Ps3 can be output from the event pixel 121 while maintaining the signal components included in the event signal Ps3 other than the flicker signal FK12, and disappearance of the event to be detected in the event pixel 121 can be prevented.

Thus, in the second embodiment described above, the flicker signal included in the event signal detected by the event pixel 121 is canceled by applying the flicker signal corresponding to the output from the monitor pixel 120 to the logarithmic bias signal line BA2. As a result, it is possible to cancel the flicker signal when the event signal is detected in the event pixel 121, and prevent the occurrence of the event caused by the flicker while preventing the disappearance of the event to be detected in the event pixel 121.

### <3. Third Embodiment>

In the first embodiment described above, the flicker signal included in the event signal is canceled by applying the flicker signal to the buffer bias signal line BA1. In a third embodiment, the flicker signal included in the event signal is canceled by applying the flicker signal to a differential bias signal line BA3.

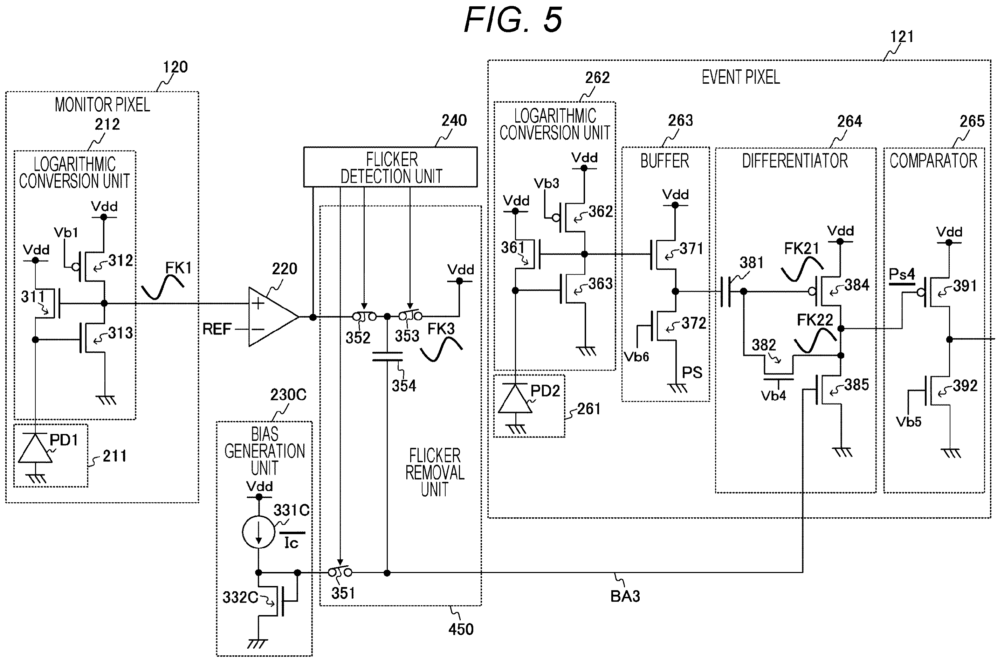

Fig. 5 is a diagram illustrating a configuration example of an anti-flicker unit according to the third embodiment.

In the drawing, the anti-flicker unit includes a flicker removal unit 450 instead of the flicker removal unit 250 of the first embodiment described above. Other configurations of the anti-flicker unit of the third embodiment are similar to those of the anti-flicker unit of the first embodiment described above.

A bias generation unit 118 includes a bias generation unit 230C. The bias generation unit 230C can generate a differential bias signal on the basis of the current mirror operation. The flicker removal unit 450 is connected to a subsequent stage of the bias generation unit 230C. The bias generation unit 230C includes a current source 331C and an N-channel field-effect transistor 332C. The current source 331C and the N-channel field-effect transistor 332C are connected in series to each other. The gate of the N-channel field-effect transistor 332C is connected to the drain of the N-channel field-effect transistor 332C. The current source 331C outputs a constant current Ic.

The flicker removal unit 450 removes the flicker signal detected by a flicker detection unit 240 from the event signal detected by an event pixel 121. At this time, the flicker removal unit 450 can apply the flicker signal output from a monitor pixel 120 to the differential bias signal line BA3 to cancel the flicker signal included in the event signal.

The flicker removal unit 450 can be configured similarly to the flicker removal unit 250. Note, however, that a switch 351 connects the output of the bias generation unit 230B to the gate of an N-channel field-effect transistor 385 via the differential bias signal line BA3.

When a flicker occurs in the event pixel 121, a signal reflecting the flicker is output from a photoelectric conversion unit 261, subjected to logarithmic conversion by a logarithmic conversion unit 262, and then applied to the gate of a P-channel field-effect transistor 384 via a buffer 263. At this time, the signal applied to the gate of the P-channel field-effect transistor 384 includes a flicker signal FK21.

Furthermore, when a flicker occurs in the event pixel 121, the flicker is detected by the monitor pixel 120, and a flicker signal FK1 is input to the buffer 220. The flicker signal FK1 input to the buffer 220 is input to the flicker detection unit 240, and the flicker is detected by the flicker detection unit 240. When detecting the flicker, the flicker detection unit 240 turns on the switch 352 and turns off the switches 351 and 353.

In addition, when the flicker signal FK1 is input to the buffer 220, a flicker signal FK3 is input to the flicker removal unit 450 via the buffer 220. Then, it is assumed that the flicker signal FK3 is input to the flicker removal unit 450 when the switch 352 is turned on and the switches 351 and 353 are turned off. At this time, a flicker signal FK22 is applied to the gate of the N-channel field-effect transistor 385 via the switch 352, a capacitor 354, and the differential bias signal line BA3 sequentially.

Here, the frequency, amplitude, and phase of the flicker signal FK22 are substantially equal to the frequency, amplitude, and phase of a flicker signal FK21. Therefore, the flicker signal FK21 included in the event signal detected by the event pixel 121 is canceled on the basis of the flicker signal FK22 according to the output from the monitor pixel 120. Therefore, an event signal Ps4 from which the flicker signal FK21 has been removed is output from a differentiator 264. Here, the event signal Ps4 can be output from the event pixel 121 while maintaining the signal components included in the event signal Ps4 other than the flicker signal FK21, and disappearance of the event to be detected in the event pixel 121 can be prevented.

Thus, in the third embodiment described above, the flicker signal included in the event signal detected by the event pixel 121 is canceled by applying the flicker signal corresponding to the output from the monitor pixel 120 to the differential bias signal line BA3. As a result, it is possible to cancel the flicker signal when the event signal is detected in the event pixel 121, and prevent the occurrence of the event caused by the flicker while preventing the disappearance of the event to be detected in the event pixel 121.

### <4. Fourth Embodiment>

In the first embodiment described above, the flicker signal included in the event signal is canceled by applying the flicker signal to the buffer bias signal line BA1. In a fourth embodiment, the flicker signal included in the event signal is canceled by applying the flicker signal to a current mirror bias signal line BA4.

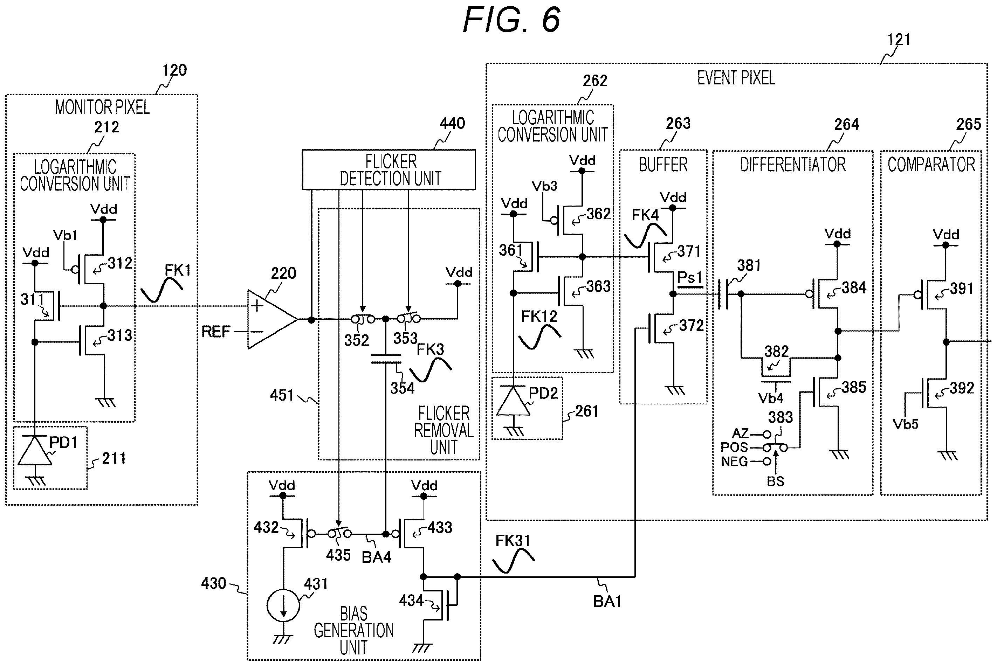

Fig. 6 is a diagram illustrating a configuration example of an anti-flicker unit according to the fourth embodiment.

In the drawing, the anti-flicker unit includes a flicker detection unit 440 and a flicker removal unit 451 instead of the flicker detection unit 240 and the flicker removal unit 250 of the first embodiment described above. Other configurations of the anti-flicker unit of the fourth embodiment are similar to those of the anti-flicker unit of the first embodiment described above. Furthermore, a bias generation unit 118 includes a bias generation unit 430 instead of the bias generation unit 230A of the first embodiment described above.

The bias generation unit 430 can generate a buffer bias signal on the basis of the current mirror operation. The flicker removal unit 451 is connected to a preceding stage of the bias generation unit 430. An event pixel 121 is connected to a subsequent stage of the bias generation unit 430. The bias generation unit 430 includes a current source 431, P-channel field-effect transistors 432 and 433, an N-channel field-effect transistor 434, and a switch 435. The current source 431 and the P-channel field-effect transistor 432 are connected in series to each other. The P-channel field-effect transistor 433 and the N-channel field-effect transistor 434 are connected in series to each other. The gate of the N-channel field-effect transistor 434 is connected to the drain of the N-channel field-effect transistor 434. The gate of the P-channel field-effect transistor 432 is connected to the gate of the P-channel field-effect transistor 433 via the switch 435. The drain of the N-channel field-effect transistor 434 is connected to the gate of an N-channel field-effect transistor 372 via a buffer bias signal line BA1. The drains of the P-channel field-effect transistors 432 and 433 are connected to a power supply Vdd.

The flicker detection unit 440 performs switching control of switches 352, 353, and 435 on the basis of the detection result of the flicker signal. For example, in a case where the flicker signal is detected, the flicker detection unit 440 turns on the switch 352 and turns off the switches 353 and 435. On the other hand, in a case where the flicker signal is not detected, the flicker detection unit 440 turns off the switch 352 and turns on the switches 353 and 435.

The flicker removal unit 451 removes the flicker signal detected by the flicker detection unit 440 from the event signal detected by the event pixel 121. At this time, the flicker removal unit 451 can apply the flicker signal output from a monitor pixel 120 to the current mirror bias signal line BA4 to cancel the flicker signal included in the event signal.

In the flicker removal unit 451, the switch 351 is removed from the flicker removal unit 250 of the first embodiment described above. Here, a connection point of the switches 352 and 353 is connected to the gate of the P-channel field-effect transistor 433 via a capacitor 354. Other configurations of the flicker removal unit 451 are similar to those of the flicker removal unit 250 according to the first embodiment described above.

When a flicker occurs in the event pixel 121, a signal reflecting the flicker is output from a photoelectric conversion unit 261 and applied to the gate of an N-channel field-effect transistor 363. At this time, the signal applied to the gate of the N-channel field-effect transistor 363 includes a flicker signal FK12.

Furthermore, when a flicker occurs in the event pixel 121, the flicker is detected by the monitor pixel 120, and a flicker signal FK1 is input to the buffer 220. The flicker signal FK1 input to the buffer 220 is input to the flicker detection unit 440, and the flicker is detected by the flicker detection unit 440. When detecting the flicker, the flicker detection unit 440 turns on the switch 352 and turns off the switches 353 and 435.

In addition, when the flicker signal FK1 is input to the buffer 220, a flicker signal FK3 is input to the flicker removal unit 451 via the buffer 220. Then, it is assumed that the flicker signal FK3 is input to the flicker removal unit 451 when the switch 352 is turned on and the switches 353 and 435 are turned off. At this time, the flicker signal FK3 is applied to the gate of the P-channel field-effect transistor 433 via the capacitor 354, and a flicker signal FK31 is output from the drain of the P-channel field-effect transistor 433. The flicker signal FK31 output from the drain of the P-channel field-effect transistor 433 is applied to the gate of the N-channel field-effect transistor 372 via a buffer bias signal line BA1.

Here, the frequency, amplitude, and phase of the flicker signal FK31 are substantially equal to the frequency, amplitude, and phase of a flicker signal FK4. Therefore, the flicker signal FK4 included in the event signal detected by the event pixel 121 is canceled on the basis of the flicker signal FK31 according to the output from the monitor pixel 120. Therefore, an event signal Ps1 from which the flicker signal FK4 has been removed is output from the buffer 263. Here, the event signal Ps1 can be output from the event pixel 121 while maintaining the signal components included in the event signal Ps1 other than the flicker signal FK4, and disappearance of the event to be detected in the event pixel 121 can be prevented.

Thus, in the fourth embodiment described above, the flicker signal included in the event signal detected by the event pixel 121 is canceled by applying the flicker signal corresponding to the output from the monitor pixel 120 to the current mirror bias signal line BA4. As a result, it is possible to cancel the flicker signal when the event signal is detected in the event pixel 121, and prevent the occurrence of the event caused by the flicker while preventing the disappearance of the event to be detected in the event pixel 121.

Note that in the above-described fourth embodiment, an example has been described in which the flicker signal is applied to the buffer bias signal line BA1 in order to cancel the flicker signal included in the event signal. In addition, in order to cancel the flicker signal included in the event signal, the flicker signal may be applied to the logarithmic bias signal line BA2, or the flicker signal may be applied to the differential bias signal line BA3.

### <5. Fifth Embodiment>

In the first embodiment described above, the flicker signal included in the event signal is canceled by applying the flicker signal to the buffer bias signal line. In a fifth embodiment, a current used to generate a bias signal is controlled on the basis of a flicker signal detected from the output of a monitor pixel 120, thereby canceling the flicker signal included in the event signal.

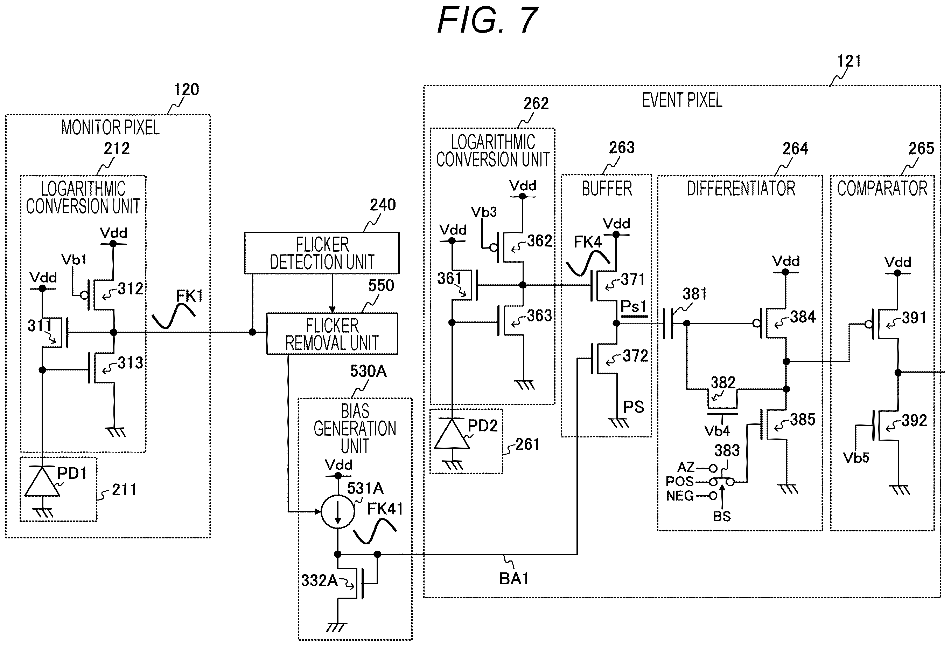

Fig. 7 is a diagram illustrating a configuration example of an anti-flicker unit according to the fifth embodiment.

In the drawing, the anti-flicker unit includes a flicker removal unit 550 instead of the flicker removal unit 250 of the first embodiment described above. Other configurations of the anti-flicker unit of the fifth embodiment are similar to those of the anti-flicker unit of the first embodiment described above.

A bias generation unit 118 includes a bias generation unit 530A instead of the bias generation unit 230A of the first embodiment described above. The bias generation unit 530A can generate a buffer bias signal on the basis of the current mirror operation. The flicker removal unit 550 is connected to a preceding stage of the bias generation unit 530A. The bias generation unit 530A includes a current source 531A instead of the current source 331A of the first embodiment described above. Other configurations of the bias generation unit 530A of the fifth embodiment are similar to those of the bias generation unit 230A of the first embodiment described above. The current source 531A and an N-channel field-effect transistor 332A are connected in series to each other. The current source 531A changes the current on the basis of the output of the flicker removal unit 550.

The flicker removal unit 550 removes the flicker signal detected by a flicker detection unit 240 from the event signal detected by an event pixel 121. At this time, the flicker removal unit 550 can control the current of the current source 531A on the basis of the output of the monitor pixel 120 and cancel the flicker signal included in the event signal. For example, the flicker removal unit 550 can convert the output voltage of the monitor pixel 120 into a current register value and control the current of the current source 531A on the basis of the current register value.

When a flicker occurs in the event pixel 121, a signal reflecting the flicker is output from the photoelectric conversion unit 261 and applied to the gate of the N-channel field-effect transistor 371 via the logarithmic conversion unit 262. At this time, the signal applied to the gate of the N-channel field-effect transistor 371 includes a flicker signal FK4.

Furthermore, when a flicker occurs in the event pixel 121, the flicker is detected by the monitor pixel 120, a flicker signal FK1 is input to the flicker detection unit 240, and the flicker is detected by the flicker detection unit 240. When detecting the flicker, the flicker detection unit 240 instructs the flicker removal unit 550 to control the current of the current source 531A on the basis of the output of the monitor pixel 120.

When receiving the instruction from the flicker detection unit 240, the flicker removal unit 550 controls the current of the current source 531A on the basis of the output of the monitor pixel 120. At this time, a flicker signal FK41 is superimposed on the current of the current source 531A, and the flicker signal FK41 is output from the drain of the N-channel field-effect transistor 332A. The flicker signal FK41 output from the drain of the N-channel field-effect transistor 332A is applied to the gate of the N-channel field-effect transistor 372 via a buffer bias signal line BA1.

Here, the frequency, amplitude, and phase of the flicker signal FK41 are substantially equal to the frequency, amplitude, and phase of a flicker signal FK4. Therefore, the flicker signal FK4 included in the event signal detected by the event pixel 121 is canceled on the basis of the flicker signal FK41 according to the output from the monitor pixel 120. Therefore, an event signal Ps1 from which the flicker signal FK4 has been removed is output from the buffer 263. Here, the event signal Ps1 can be output from the event pixel 121 while maintaining the signal components included in the event signal Ps1 other than the flicker signal FK4, and disappearance of the event to be detected in the event pixel 121 can be prevented.

Thus, in the fifth embodiment described above, a current used to generate a bias signal is controlled on the basis of a flicker signal detected from the output of the monitor pixel 120, thereby canceling the flicker signal included in the event signal. As a result, it is possible to cancel the flicker signal when the event signal is detected in the event pixel 121, and prevent the occurrence of the event caused by the flicker while preventing the disappearance of the event to be detected in the event pixel 121.

Note that in the above-described fifth embodiment, an example has been described in which the flicker signal is applied to the buffer bias signal line BA1 in order to cancel the flicker signal included in the event signal. In addition, in order to cancel the flicker signal included in the event signal, the flicker signal may be applied to the logarithmic bias signal line BA2, or the flicker signal may be applied to the differential bias signal line BA3.

### <6. Sixth Embodiment>

In the first embodiment described above, the flicker signal included in the event signal is canceled by applying the flicker signal to the buffer bias signal line BA1. In a sixth embodiment, a flicker signal included in an event signal is canceled by controlling a current of a logarithmic conversion unit provided in a flicker removal unit.

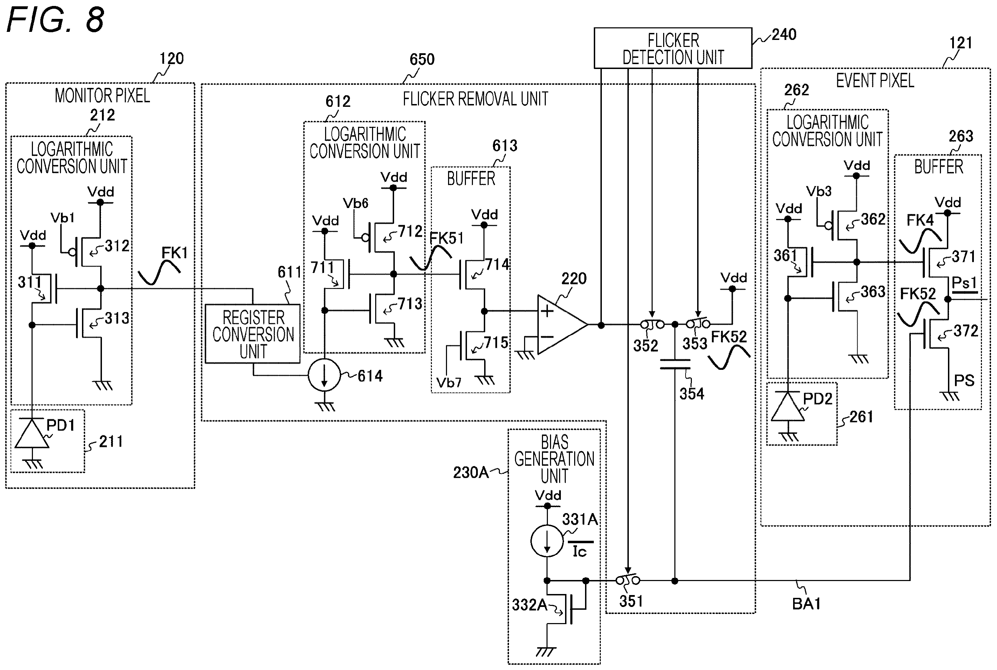

Fig. 8 is a diagram illustrating a configuration example of an anti-flicker unit according to the sixth embodiment.

In the drawing, an anti-flicker unit includes a flicker removal unit 650 instead of the flicker removal unit 250 of the first embodiment described above. Other configurations of the anti-flicker unit of the sixth embodiment are similar to those of the anti-flicker unit of the first embodiment described above.

The flicker removal unit 650 removes the flicker signal detected by a flicker detection unit 240 from the event signal detected by an event pixel 121. At this time, the flicker removal unit 650 applies a flicker signal generated on the basis of the output of a logarithmic conversion unit 612 that is current-controlled on the basis of the output from a monitor pixel 120 to a buffer bias signal line BA1, and cancels the flicker signal included in the event signal.

The flicker removal unit 650 is obtained by adding a register conversion unit 611, the logarithmic conversion unit 612, buffers 220 and 663, and a current source 614 to the flicker removal unit 250 of the first embodiment described above. Other configurations of the flicker removal unit 650 of the sixth embodiment are similar to those of the flicker removal unit 250 of the first embodiment described above.

The register conversion unit 611 can convert the output voltage of the monitor pixel 120 into a current register value and control the current of the current source 614 on the basis of the current register value.

The logarithmic conversion unit 612 logarithmically converts the current of the current source 614. The logarithmic conversion unit 612 includes N-channel field-effect transistors 711 and 713 and a P-channel field-effect transistor 712. The P-channel field-effect transistor 712 and the N-channel field-effect transistor 713 are connected in series to each other. A connection point of the P-channel field-effect transistor 712 and the N-channel field-effect transistor 713 is used as an output of the logarithmic conversion unit 612. Furthermore, a connection point of the P-channel field-effect transistor 712 and the N-channel field-effect transistor 713 is connected to the gate of the N-channel field-effect transistor 711. A bias voltage Vb6 is applied to the gate of the P-channel field-effect transistor 712. The gate of the N-channel field-effect transistor 713 is connected to the current source 614 and the source of the N-channel field-effect transistor 711. A power supply Vdd is supplied to the drains of the P-channel field-effect transistor 712 and the N-channel field-effect transistor 711.

A buffer 613 outputs the output of the logarithmic conversion unit 262 to the non-inverting input of the buffer 220. The buffer 613 is connected to a subsequent stage of the logarithmic conversion unit 612. The buffer 613 includes N-channel field-effect transistors 714 and 715. The N-channel field-effect transistors 714 and 715 are connected in series to each other. A connection point of the N-channel field-effect transistors 714 and 715 is used as an output of the buffer 613. The gate of the N-channel field-effect transistor 714 is connected to the output of the logarithmic conversion unit 612. A bias voltage Vb7 is applied to the gate of the N-channel field-effect transistor 715. The power supply Vdd is supplied to the drain of the N-channel field-effect transistor 714.

When a flicker occurs in the event pixel 121, a signal reflecting the flicker is output from the photoelectric conversion unit 261 and applied to the gate of the N-channel field-effect transistor 371 via the logarithmic conversion unit 262. At this time, the signal applied to the gate of the N-channel field-effect transistor 371 includes a flicker signal FK4.

Furthermore, when a flicker occurs in the event pixel 121, the flicker is detected by the monitor pixel 120, and a flicker signal FK1 is input to the flicker removal unit 650. At this time, the output of the monitor pixel 120 including the flicker signal FK1 is converted into a current register value by the register conversion unit 611, and the current of the current source 614 is controlled on the basis of the current register value. Then, the current of the current source 614 is subjected to logarithmic conversion in the logarithmic conversion unit 612, and the output of the logarithmic conversion unit 612 at that time is input to the buffer 220 via the buffer 613. At this time, the output of the logarithmic conversion unit 612 includes a flicker signal FK51. Then, the flicker signal FK51 output from the logarithmic conversion unit 612 is input to the flicker detection unit 240 via the buffers 613 and 220 sequentially, and the flicker is detected by the flicker detection unit 240. When detecting the flicker, the flicker detection unit 240 turns on the switch 352 and turns off the switches 351 and 353.

In addition, it is assumed that the flicker signal FK51 is output from the logarithmic conversion unit 612 when the switch 352 is turned on and the switches 351 and 353 are turned off. At this time, a flicker signal FK52 is applied to the gate of an N-channel field-effect transistor 372 via the buffers 613 and 220, the switch 352, a capacitor 354, and the buffer bias signal line BA1 sequentially.

Here, the frequency, amplitude, and phase of the flicker signal FK52 are substantially equal to the frequency, amplitude, and phase of the flicker signal FK4. Therefore, the flicker signal FK4 included in the event signal detected by the event pixel 121 is canceled on the basis of the flicker signal FK52 according to the output from the monitor pixel 120. Therefore, an event signal Ps1 from which the flicker signal FK4 has been removed is output from the buffer 263. Here, the event signal Ps1 can be output from the event pixel 121 while maintaining the signal components included in the event signal Ps1 other than the flicker signal FK4, and disappearance of the event to be detected in the event pixel 121 can be prevented.

Thus, in the sixth embodiment described above, a flicker signal included in an event signal is canceled by controlling a current of the logarithmic conversion unit 612 provided in the flicker removal unit 650. As a result, it is possible to cancel the flicker signal when the event signal is detected in the event pixel 121, and prevent the occurrence of the event caused by the flicker while preventing the disappearance of the event to be detected in the event pixel 121.

Note that in the above-described sixth embodiment, an example has been described in which the flicker signal is applied to the buffer bias signal line BA1 in order to cancel the flicker signal included in the event signal. In addition, in order to cancel the flicker signal included in the event signal, the flicker signal may be applied to the logarithmic bias signal line BA2, or the flicker signal may be applied to the differential bias signal line BA3.

### <7. Seventh Embodiment>

In the first embodiment described above, the monitor pixel 120 is provided in the anti-flicker unit 119 outside the pixel array unit 111. In a seventh embodiment, the monitor pixel is provided in the pixel array unit.

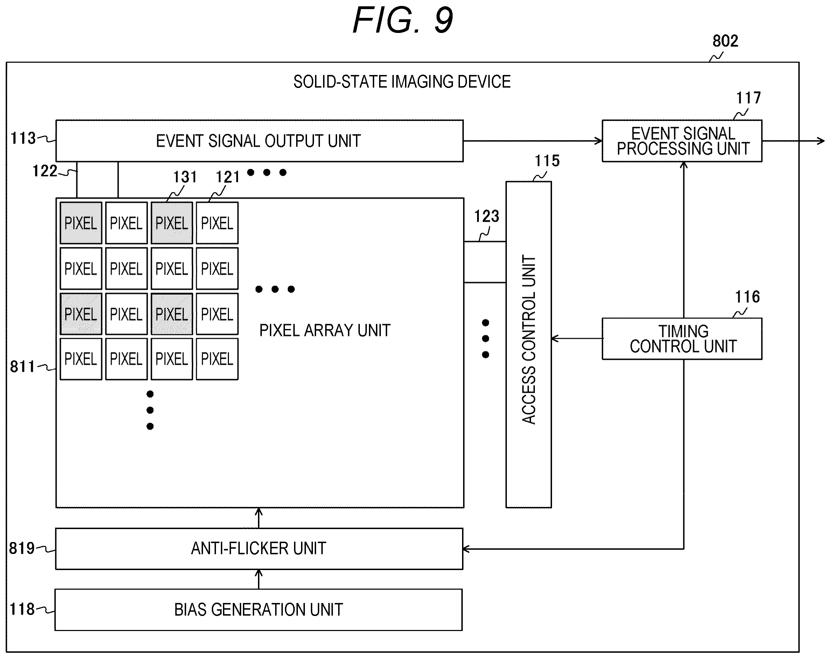

Fig. 9 is a block diagram illustrating a configuration example of a solid-state imaging device according to the seventh embodiment.

In the drawing, a solid-state imaging device 802 includes a pixel array unit 811 and an anti-flicker unit 819 instead of the pixel array unit 111 and the anti-flicker unit 119 of the first embodiment described above. Other configurations of the solid-state imaging device 802 of the seventh embodiment are similar to those of the solid-state imaging device 102 of the first embodiment described above.

In the pixel array unit 811, event pixels 121 and monitor pixels 131 are arranged in an array. At this time, the event pixels 121 and the monitor pixels 131 may be arranged in a matrix in the row direction and the column direction. The event pixels 121 and the monitor pixels 131 may be alternately arranged in the row direction or may be alternately arranged in the column direction. The monitor pixel 131 can output a flicker signal on the basis of a pixel signal detected by the monitor pixel 131. The monitor pixel 131 can be configured similarly to the monitor pixel 120 of the first embodiment described above. Event pixels 121 and the monitor pixels 131 may be driven row by row via horizontal control lines 123. The event pixels 121 and the monitor pixel 131 can output signals for each column via a vertical signal line 122.

Here, for example, one monitor pixel 131 and three event pixels 121 adjacent to the monitor pixel 131 can be set as one cell. Then, the flicker signals of the three event pixels 121 of each cell may be canceled by the flicker signal of one monitor pixel 131 included in the cell. As a result, it is possible to cancel the flicker signal included in the event signal output from the event pixel 121 on the basis of the output of the monitor pixel 131 while coping with the non-uniformity of the flicker of the pixel array unit 811.

In the anti-flicker unit 819, the monitor pixel 120 of the above-described first embodiment is removed. At this time, the anti-flicker unit 819 can detect the flicker signal on the basis of the output from the monitor pixel 131. Then, the anti-flicker unit 819 can cancel the flicker signal included in the event signal output from the event pixel 121 on the basis of the flicker signal generated on the basis of the output of the monitor pixel 131.

Thus, in the seventh embodiment described above, the monitor pixel 131 is provided in the pixel array unit 811. As a result, uniformity between the flicker detected by the monitor pixel 131 and the flicker detected by the event pixel 121 can be improved, and the cancellation accuracy of the flicker signal included in the event signal output from the event pixel 121 can be improved.

### <8. Eighth Embodiment>

In the first embodiment described above, the output of the logarithmic conversion unit 212 of the single photoelectric conversion unit 211 is set as the output of the monitor pixel 120. In an eighth embodiment, an added value of outputs of logarithmic conversion units of a plurality of photoelectric conversion units is set as an output of a monitor pixel.

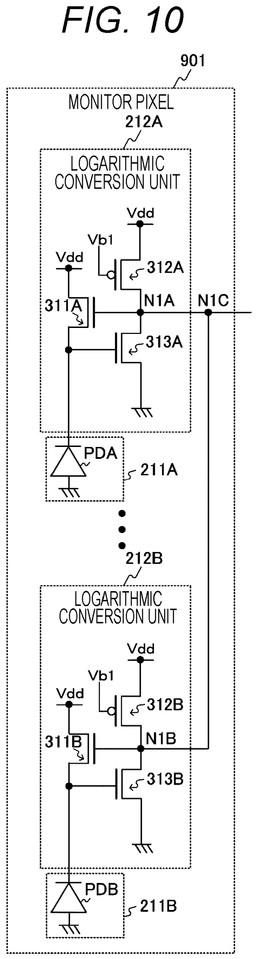

Fig. 10 is a diagram illustrating a configuration example of a monitor pixel according to the eighth embodiment.

In the drawing, a monitor pixel 901 includes a plurality of photoelectric conversion units 211A and 211B and a plurality of logarithmic conversion units 212A and 212B.

Each of the photoelectric conversion units 211A and 211B converts incident light into an electric signal. Each of the photoelectric conversion units 211A and 211B can include a photodiode PDA and a PDB, respectively.

Each of the logarithmic conversion units 212A and 212B logarithmically converts the output of each of the photoelectric conversion units 211A and 211B. The logarithmic conversion unit 212A is connected to the subsequent stage of the photoelectric conversion unit 211A, and the logarithmic conversion unit 212B is connected to the subsequent stage of the photoelectric conversion unit 211B.

The logarithmic conversion unit 212A includes N-channel field-effect transistors 311A and 313A and a P-channel field-effect transistor 312A. The P-channel field-effect transistor 312A and the N-channel field-effect transistor 313A are connected in series to each other. A connection point N1A of the P-channel field-effect transistor 312A and the N-channel field-effect transistor 313A is connected to the gate of the N-channel field-effect transistor 311A. A bias voltage Vb1 is applied to the gate of the P-channel field-effect transistor 312A. The gate of the N-channel field-effect transistor 313A is connected to the cathode of a photodiode PDA and the source of the N-channel field-effect transistor 311A. A power supply Vdd is supplied to the drains of the P-channel field-effect transistor 312A and the N-channel field-effect transistor 311A.

The logarithmic conversion unit 212B includes N-channel field-effect transistors 311B and 313B and P-channel field-effect transistor 312B. The P-channel field-effect transistor 312B and the N-channel field-effect transistor 313B are connected in series to each other. A connection point N1B of the P-channel field-effect transistor 312B and the N-channel field-effect transistor 313B is connected to the gate of the N-channel field-effect transistor 311B. The bias voltage Vb1 is applied to the gate of the P-channel field-effect transistor 312B. The gate of the N-channel field-effect transistor 313B is connected to the cathode of a photodiode PDB and the source of the N-channel field-effect transistor 311B. The power supply Vdd is supplied to the drains of the P-channel field-effect transistor 312B and the N-channel field-effect transistor 311B.

The connection point N1A of the P-channel field-effect transistor 312A and the N-channel field-effect transistor 313A is connected to the connection point N1B of the P-channel field-effect transistor 312B and the N-channel field-effect transistor 313B. From a connection point N1C of these connection points N1A and N1B, an added value of the outputs of the logarithmic conversion units 212A and 212B is output as the output of the monitor pixel 901.

Thus, in the eighth embodiment described above, an added value of outputs of the logarithmic conversion units 212A and 212B of the plurality of photoelectric conversion units 211A and 211B is set as the output of the monitor pixel 901. As a result, it is possible to improve the driving force while reducing the variation in the flicker signal detected by the monitor pixel 901.

### <9. Ninth Embodiment>

In the eighth embodiment described above, an added value of the outputs of the logarithmic conversion units 212A and 212B of the plurality of photoelectric conversion units 211A and 211B is set as the output of the monitor pixel 901. In the ninth embodiment, an added value of the outputs of buffers of a plurality of photoelectric conversion units 211A and 211B is set as the output of the monitor pixel.

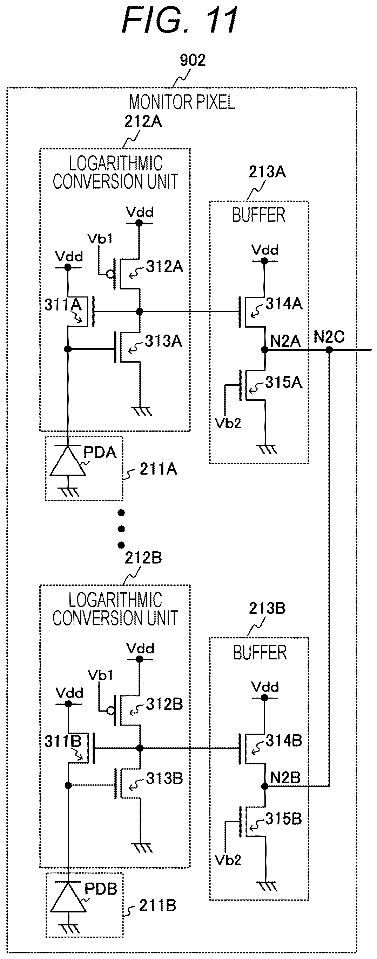

Fig. 11 is a diagram illustrating a configuration example of a monitor pixel according to the ninth embodiment.

In the drawing, in a monitor pixel 902, a plurality of buffers 213A and 213B is added to the monitor pixel 901 of the eighth embodiment described above. Other configurations of the monitor pixel 902 of the ninth embodiment are similar to those of the monitor pixel 901 of the eighth embodiment described above.

The buffer 213A is connected to a subsequent stage of the logarithmic conversion unit 212A, and the buffer 213B is connected to a subsequent stage of the logarithmic conversion unit 212B. The buffer 213A includes N-channel field-effect transistors 314A and 315A. The N-channel field-effect transistors 314A and 315A are connected in series to each other. The gate of the N-channel field-effect transistor 314A is connected to the output of the logarithmic conversion unit 212A. A bias signal Vb2 is applied to the gate of the N-channel field-effect transistor 315A. A power supply Vdd is supplied to the drain of the N-channel field-effect transistor 314A.

The buffer 213B includes N-channel field-effect transistors 314B and 315B. The N-channel field-effect transistors 314B and 315B are connected in series to each other. The gate of the N-channel field-effect transistor 314B is connected to the output of the logarithmic conversion unit 212B. The bias signal Vb2 is applied to the gate of the N-channel field-effect transistor 315B. The power supply Vdd is supplied to the drain of the N-channel field-effect transistor 314B.

A connection point N2A of the N-channel field-effect transistors 314A and 315A is connected to a connection point N2B of the N-channel field-effect transistors 314B and 315B. From a connection point N2C of these connection points N2A and N2B, an added value of the outputs of the buffers 213A and 213B is output as the output of the monitor pixel 902.

Thus, in the ninth embodiment described above, an added value of outputs of the buffers 213A and 213B of the plurality of photoelectric conversion units 211A and 211B is set as the output of the monitor pixel 902. As a result, it is possible to improve the driving force while reducing the variation in the flicker signal detected by the monitor pixel 902.

### <10. 10th Embodiment>

In the first embodiment described above, the buffer 220 is provided between the monitor pixel 120 and the flicker removal unit 250. In a 10th embodiment, a buffer is provided in the monitor pixel.

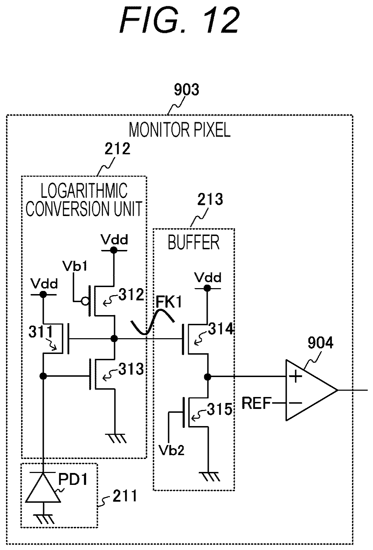

Fig. 12 is a diagram illustrating a configuration example of a monitor pixel according to the 10th embodiment.

In the drawing, in a monitor pixel 903, a buffer 904 is added to the monitor pixel 120 of the first embodiment described above. Other configurations of the monitor pixel 903 of the 10th embodiment are similar to those of the monitor pixel 120 of the first embodiment described above.

The buffer 904 is connected to a subsequent stage of a buffer 213. The non-inverting input of the buffer 904 is connected to the output of the buffer 213. A reference signal REF is applied as an inverting input of the buffer 904. The output of the buffer 904 is connected to a flicker detection unit 240 and a flicker removal unit 250.

Thus, in the 10th embodiment described above, the buffer 904 is provided in the monitor pixel 903. As a result, the driving force of the monitor pixel 903 can be improved.

### <11. 11th Embodiment>

In the seventh embodiment described above, the event pixel 121 and the monitor pixel 131 are provided in the pixel array unit 111. In an 11th embodiment, an event pixel provided in a pixel array unit is used as a monitor pixel.

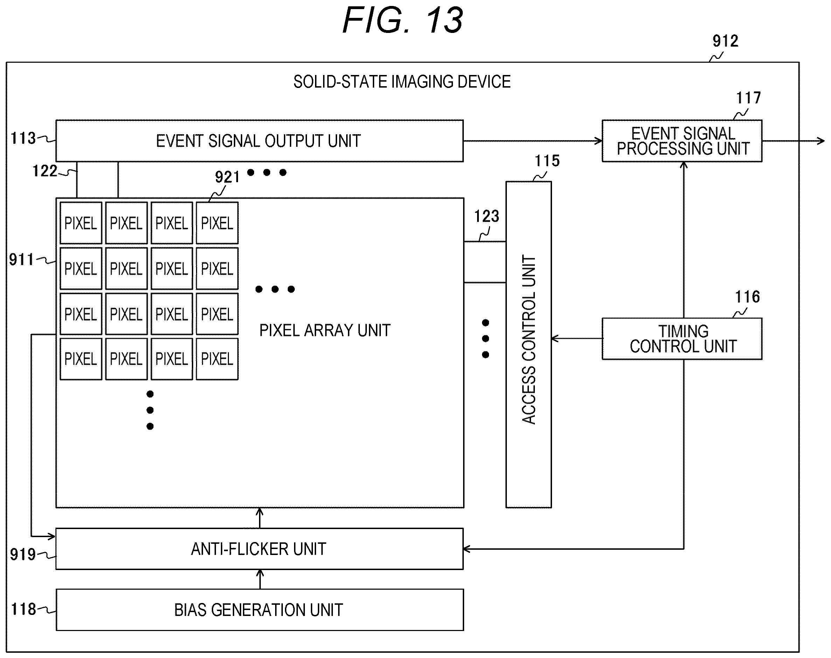

Fig. 13 is a diagram illustrating a configuration example of a solid-state imaging device according to the 11th embodiment.

In the drawing, a solid-state imaging device 912 includes a pixel array unit 911 and an anti-flicker unit 919 instead of the pixel array unit 811 and the anti-flicker unit 819 of the seventh embodiment described above. Other configurations of the solid-state imaging device 912 of the 11th embodiment are similar to those of the solid-state imaging device 802 of the seventh embodiment described above.

In the pixel array unit 911, event-combined pixels 921 are arranged in an array. At this time, the event-combined pixels 921 may be arranged in a matrix in the row direction and the column direction. The event-combined pixel 921 serves as both the event pixel 121 and the monitor pixel 131. At this time, the event-combined pixel 921 can output the flicker signal and the event signal on the basis of the pixel signal detected by the event-combined pixel 921. Then, the event-combined pixel 921 can cancel the flicker signal included in the event signal output from the event-combined pixel 921 on the basis of the flicker signal output from the event-combined pixel 921. The event-combined pixel 921 can be driven row by row via horizontal control lines 123. The event-combined pixel 921 can output signals for each column via vertical signal lines 122. Furthermore, each event-combined pixel 921 can output the flicker signal detected by the event-combined pixel 921 to the anti-flicker unit 919.

The anti-flicker unit 919 can detect the flicker signal on the basis of the output from the event-combined pixel 921. Then, the anti-flicker unit 919 can cancel the flicker signal included in the event signal output from the event-combined pixel 921 on the basis of the flicker signal generated on the basis of the output of the event-combined pixel 921.

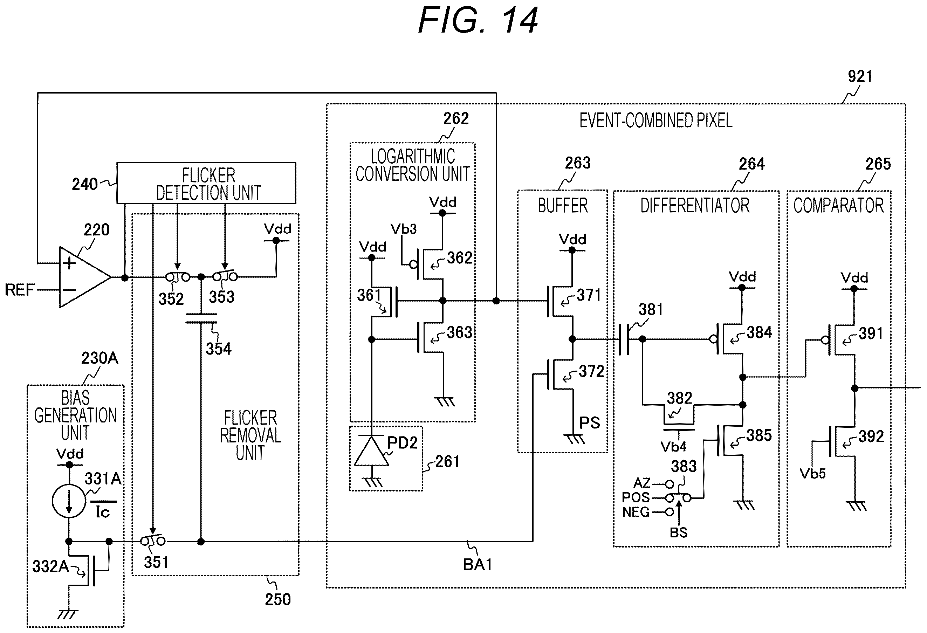

Fig. 14 is a diagram illustrating a configuration example of the anti-flicker unit according to the 11th embodiment.

In the drawing, the anti-flicker unit 919 can be configured similarly to the anti-flicker unit 819 of the seventh embodiment described above. The event-combined pixel 921 can be configured similarly to the event pixel 121 of the first embodiment described above. Note, however, that the output of a logarithmic conversion unit 262 of the event-combined pixel 921 is branched and connected to a buffer 220. At this time, a non-inverting input of the buffer 220 is connected to a connection point between a P-channel field-effect transistor 362 and an N-channel field-effect transistor 363.

As a result, the event-combined pixel 921 can be used as a monitor pixel as well as an event pixel. Here, in the event-combined pixel 921, in order to detect the flicker signal while canceling the flicker signal included in the event signal, the flicker signal can be detected in the preceding stage of the event-combined pixel 921, and the flicker signal can be canceled in the subsequent stage of the event-combined pixel 921.

Thus, in the 11th embodiment described above, the flicker signal included in the event signal output from the event-combined pixel 921 is canceled on the basis of the flicker signal output from the event-combined pixel 921. As a result, it is possible to cancel the flicker signal output from the event-combined pixel 921 on the basis of the flicker signal detected for each of the event-combined pixels 921. Therefore, flicker correction according to non-uniformity of the flicker of the pixel array unit 911 can be achieved.

Note that in the above-described 11th embodiment, an example has been described in which the flicker signal is applied to a buffer bias signal line BA1 in order to cancel the flicker signal included in the event signal. In addition, in order to cancel the flicker signal included in the event signal, the flicker signal may be applied to the logarithmic bias signal line BA2, or the flicker signal may be applied to the differential bias signal line BA3.

### <12. 12th Embodiment>

In the 11th embodiment described above, the event-combined pixel 921 provided in the pixel array unit 911 has a flicker monitoring function. In a 12th embodiment, the photoelectric conversion unit is shared between the monitor pixel and the event pixel, and the output of the photoelectric conversion unit is switched between the time of flicker detection and the time of event detection.

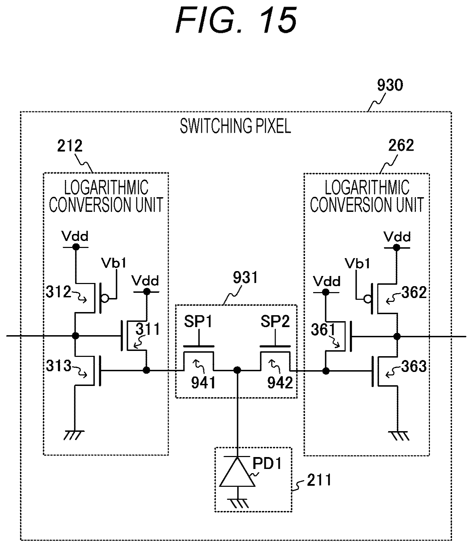

Fig. 15 is a diagram illustrating a configuration example of a pixel according to the 12th embodiment.

In the drawing, in the pixel array unit 911 according to the above-described 11th embodiment, a switching pixel 930 is arranged instead of the event-combined pixel 921. Other configurations of the pixel array unit of the 12th embodiment are similar to those of the pixel array unit 911 of the 11th embodiment described above.

The switching pixel 930 includes a photoelectric conversion unit 211, logarithmic conversion units 212 and 262, and a switching unit 931. The photoelectric conversion unit 211 is connected to the logarithmic conversion units 212 and 262 via the switching unit 931.

The switching unit 931 time-divisionally switches the output of the photoelectric conversion unit 211 to each of the logarithmic conversion units 212 and 262. The switching unit 931 includes N-channel field-effect transistors 941 and 942. The N-channel field-effect transistors 941 and 942 are connected in series to each other. A cathode of a photodiode PD1 is connected to a connection point of the N-channel field-effect transistors 941 and 942. At this time, the photodiode PD1 is connected to the gate of an N-channel field-effect transistor 313 via the N-channel field-effect transistor 941. The photodiode PD1 is connected to the gate of the N-channel field-effect transistor 363 via an N-channel field-effect transistor 942. Switching signals SP1 and SP2 are applied to the gates of the N-channel field-effect transistors 941 and 942, respectively. At this time, the N-channel field-effect transistor 941 is turned on when the switching pixel 930 is used as a monitor pixel, and the N-channel field-effect transistor 942 is turned on when the switching pixel 930 is used as an event pixel.

Thus, in the 12th embodiment described above, the switching pixel 930 shares the photoelectric conversion unit 211 between the time of flicker detection and the time of event detection, and switches the output of the photoelectric conversion unit 211 between the time of flicker detection and the time of event detection. As a result, it is possible to cancel the flicker signal output from the switching pixel 930 on the basis of the flicker signal detected for each switching pixel 930. Therefore, flicker correction according to non-uniformity of the flicker of the pixel array unit in which the switching pixel 930 is arranged can be achieved.

### <13. 13th Embodiment>

In the first embodiment described above, the anti-flicker unit 119 provided with the monitor pixels 120 is applied to all the areas of the pixel array unit 111. In a 13th embodiment, a plurality of bias generation units and a plurality of flicker removal units corresponding to a plurality of areas obtained by dividing a pixel array unit are provided.

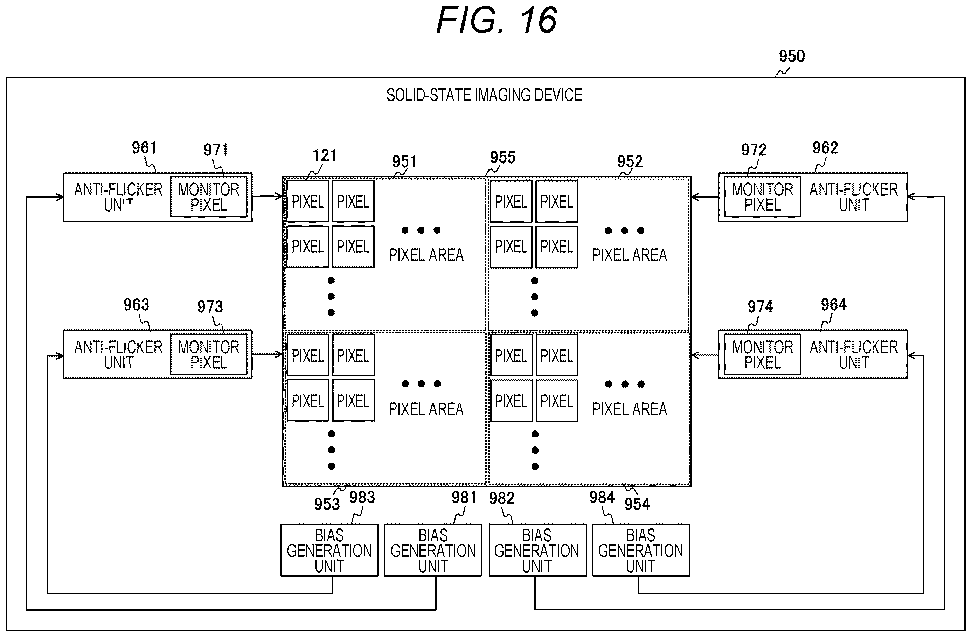

Fig. 16 is a diagram illustrating a configuration example of an anti-flicker unit according to the 13th embodiment.

In the drawing, a solid-state imaging device 950 includes a pixel array unit 955, bias generation units 981 to 984, and anti-flicker units 961 to 964 instead of the pixel array unit 111, the bias generation unit 118, and the anti-flicker unit 119 of the first embodiment described above. Other configurations of the solid-state imaging device 950 of the 13th embodiment are similar to those of the solid-state imaging device 102 of the first embodiment described above.

In the pixel array unit 955, event pixels 121 are arranged in an array. At this time, the pixel array unit 955 is divided into a plurality of areas 951 to 954.

Each of the bias generation units 981 to 984 generates a bias signal used to detect an event signal output from the event pixel 121 for each of the areas 951 to 954.

Each of the anti-flicker units 961 to 964 includes monitor pixels 971 to 974, respectively. Each of the monitor pixels 971 to 974 can output a flicker signal for each of the areas 951 to 954 on the basis of the pixel signal detected by each of the monitor pixels 971 to 974. Each of the monitor pixels 971 to 974 is preferably arranged in the vicinity of each of the areas 951 to 954.

At this time, each of the anti-flicker units 961 to 964 can detect the flicker signal for each of the areas 951 to 954 on the basis of the output from each of the monitor pixels 971 to 974. Then, each of the anti-flicker units 961 to 964 can cancel the flicker signal included in the event signal output from the event pixel 121 for each of the areas 951 to 954 on the basis of the flicker signal according to the output of each of the monitor pixels 971 to 974.

Thus, in the 13th embodiment described above, the plurality of anti-flicker units 961 to 964 and the plurality of bias generation units 981 to 984 in which the monitor pixels 971 to 974 are provided for each of the plurality of areas 951 to 954 into which the pixel array unit 955 is divided are provided. As a result, it is possible to cancel the flicker signal for each of the areas 951 to 954 arranged corresponding to the monitor pixels 971 to 974 on the basis of the flicker signal detected for each of the monitor pixels 971 to 974. Therefore, flicker correction according to non-uniformity of flicker of the pixel array unit 955 can be achieved.

Note that in the above-described 13th embodiment, an example in which the pixel array unit 955 is divided into four has been described, but the number of divisions of the pixel array unit 955 is not limited. Furthermore, the division direction of the pixel array unit 955 may be the row direction or the column direction. At this time, the pixel array unit 955 may be divided into one or more columns, or the pixel array unit 955 may be divided into one or more rows.

### <14. 14th Embodiment>

In the first embodiment described above, the flicker signal included in the event signal is canceled by applying the flicker signal to the buffer bias signal line BA1. In a 14th embodiment, the flicker signal included in the event signal is canceled by applying the flicker signal to different bias signal lines used for detecting the event signal.

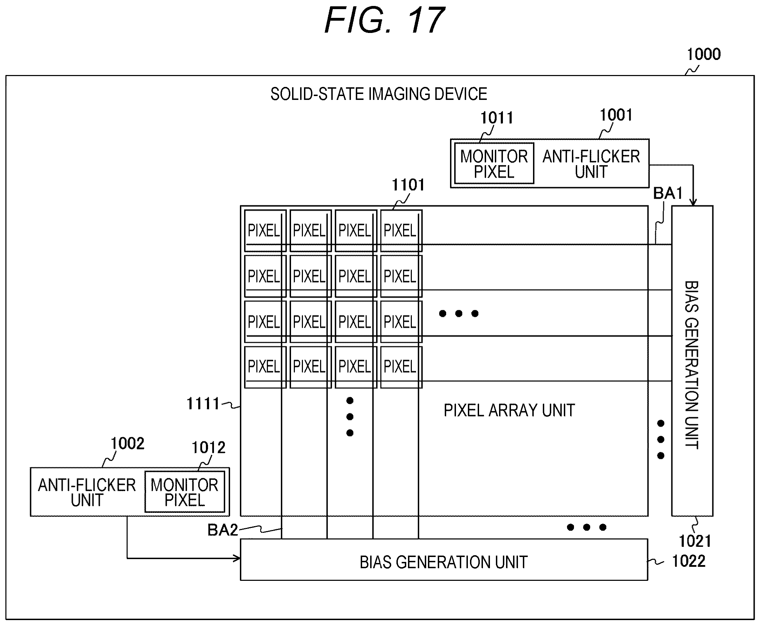

Fig. 17 is a diagram illustrating a configuration example of a solid-state imaging device according to the 14th embodiment.

In the drawing, a solid-state imaging device 1000 includes a pixel array unit 1111, bias generation units 1021 and 1022, and anti-flicker units 1001 and 1002 instead of the pixel array unit 111, the bias generation unit 118, and the anti-flicker unit 119 of the first embodiment described above. Other configurations of the solid-state imaging device 1000 of the 14th embodiment are similar to those of the solid-state imaging device 102 of the first embodiment described above.

In the pixel array unit 1111, event pixels 1101 are arranged in an array. The event pixel 1101 outputs an event signal. The event pixel 1101 is connected to a buffer bias signal line BA1 for each row and is connected to a logarithmic bias signal line BA2 for each column.

The bias generation unit 1021 generates a buffer bias signal and applies the buffer bias signal to the event pixel 1101 for each row via the buffer bias signal line BA1. The bias generation unit 1022 generates a differential bias signal and applies the differential bias signal to the event pixel 1101 for each column via the differential bias signal line BA2.

Each of the anti-flicker units 1001 and 1002 includes monitor pixels 1011 and 1012, respectively. Each of the monitor pixels 1011 and 1012 can output a flicker signal on the basis of a pixel signal detected by each of the monitor pixels 1011 and 1012.

At this time, each of the anti-flicker units 1001 and 1002 can detect the flicker signal on the basis of the output from each of the monitor pixels 1011 and 1012. Then, each of the anti-flicker units 1001 and 1002 can cancel the flicker signal included in the event signal output from the event pixel 1101 on the basis of the flicker signal output from each of the monitor pixels 1011 and 1012. At this time, the anti-flicker unit 1001 can apply the flicker signal output from the monitor pixel 1011 to the buffer bias signal line BA1 to cancel the flicker signal included in the event signal. Furthermore, the anti-flicker unit 1002 can apply the flicker signal output from the monitor pixel 1012 to the logarithmic bias signal line BA2 to cancel the flicker signal included in the event signal.

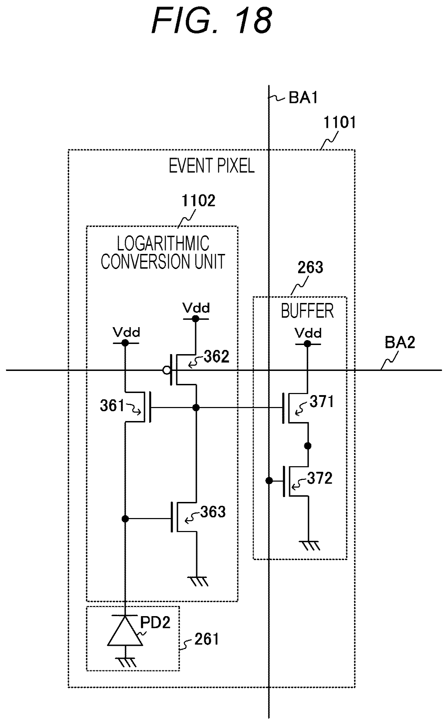

Fig. 18 is a diagram illustrating a configuration example of an event pixel according to the 14th embodiment.

In the drawing, the event pixel 1101 includes a logarithmic conversion unit 1102 instead of the logarithmic conversion unit 262 of the first embodiment described above. Other configurations of the event pixel 1101 of the 14th embodiment are similar to those of the event pixel 121 of the first embodiment described above.

The logarithmic conversion unit 1102 can be configured similarly to the logarithmic conversion unit 262 of the first embodiment described above. Note, however, that the gate of a P-channel field-effect transistor 362 is connected to the logarithmic bias signal line BA2. At this time, as the bias signal of the logarithmic conversion unit 1102, a logarithmic bias signal is used instead of the bias voltage Vb3.

Thus, in the 14th embodiment described above, the flicker signal included in the event signal is canceled by applying the flicker signal to the buffer bias signal line BA1 and the logarithmic bias signal line BA2. As a result, flicker correction according to non-uniformity of luminance distribution in different directions of the flicker can be achieved, and flicker correction accuracy can be improved.

Note that in the above-described 14th embodiment, an example has been described in which a flicker signal is applied to the buffer bias signal line BA1 and the logarithmic bias signal line BA2 in order to cancel the flicker signal included in the event signal. In addition, in order to cancel the flicker signal included in the event signal, the flicker signal may be applied to the buffer bias signal line BA1 and the differential bias signal line BA3. Alternatively, a flicker signal may be applied to the logarithmic bias signal line BA2 and the differential bias signal line BA3, or a flicker signal may be applied to the buffer bias signal line BA1, the logarithmic bias signal line BA2, and the differential bias signal line BA3.

### <15. 15th Embodiment>

In the first embodiment described above, the photoelectric conversion unit 211 and the logarithmic conversion unit 212 are provided in the monitor pixel 120. In a 15th embodiment, a configuration equivalent to the event pixel 121 is used for the monitor pixel.

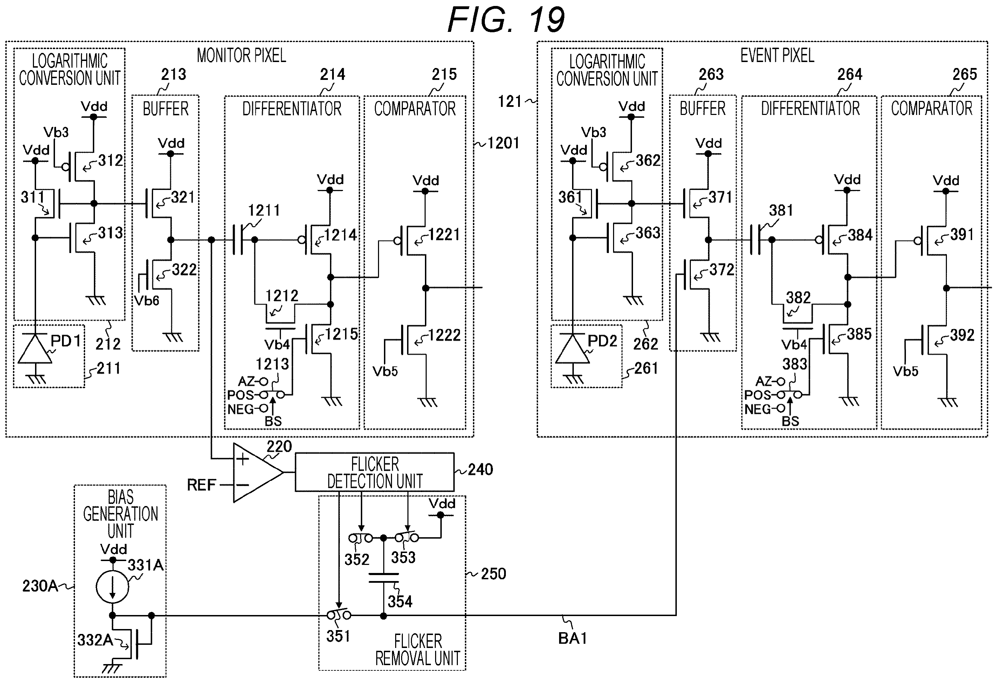

Fig. 19 is a diagram illustrating a configuration example of a monitor pixel according to the 15th embodiment.

In the drawing, in a monitor pixel 1201, a buffer 213, a differentiator 214, and a comparator 215 are added to the monitor pixel 120 of the first embodiment described above. Other configurations of the monitor pixel 1201 of the 15th embodiment are similar to those of the monitor pixel 120 of the first embodiment described above.

The buffer 213 passes the output of a logarithmic conversion unit 212 to the differentiator 214. The buffer 213 is connected to a subsequent stage of the logarithmic conversion unit 212. The buffer 213 includes N-channel field-effect transistors 321 and 322. The N-channel field-effect transistors 321 and 322 are connected in series to each other. A connection point of the N-channel field-effect transistors 321 and 322 is used as an output of the buffer 213. The gate of the N-channel field-effect transistor 321 is connected to the output of the logarithmic conversion unit 212. A bias voltage Vb6 is applied to the gate of the N-channel field-effect transistor 322. A power supply Vdd is supplied to the drain of the N-channel field-effect transistor 321.

The differentiator 214 is connected to a subsequent stage of the buffer 213. The differentiator 214 differentiates the output of the logarithmic conversion unit 212 delivered via the buffer 213. The differentiator 214 includes a capacitor 1211, N-channel field-effect transistors 1212 and 1215, a P-channel field-effect transistor 1214, and a switch 1213.

The capacitor 1211 is connected between the output of the buffer 213 and the input of the differentiator 214. The P-channel field-effect transistor 1214 and the N-channel field-effect transistor 1215 are connected in series to each other. A connection point of the P-channel field-effect transistor 1214 and the N-channel field-effect transistor 1215 is used as an output of the differentiator 214. Furthermore, a connection point of the P-channel field-effect transistor 1214 and the N-channel field-effect transistor 1215 is connected to the gate of the P-channel field-effect transistor 1214 via the N-channel field-effect transistor 1212. The switch 1213 is connected to the gate of the N-channel field-effect transistor 1215. The power supply Vdd is supplied to the drain of the P-channel field-effect transistor 1214.

The switch 1213 switches between a reset signal AZ, a positive bias signal POS, and a negative bias signal NEG and applies the signals to the gate of the N-channel field-effect transistor 1215. At this time, the switch 1213 can switch between the reset signal AZ, the positive bias signal POS, and the negative bias signal NEG on the basis of a switching signal BS.

The comparator 215 is connected to a subsequent stage of the differentiator 214. The comparator 215 includes a P-channel field-effect transistor 1221 and an N-channel field-effect transistor 1222. The P-channel field-effect transistor 1221 and the N-channel field-effect transistor 1222 are connected in series to each other. A connection point of the P-channel field-effect transistor 1221 and the N-channel field-effect transistor 1222 is used as an output of the comparator 215. The gate of the P-channel field-effect transistor 1221 is connected to the output of the differentiator 214. A bias voltage Vb5 is applied to the gate of the N-channel field-effect transistor 1222.

Thus, in the 15th embodiment described above, the configuration equivalent to the event pixel 121 is used for the monitor pixel 1201. As a result, the uniformity of the characteristics of the event pixel 121 and the monitor pixel 1201 can be improved.

### <16. 16th Embodiment>

In the first embodiment described above, the flicker signal included in the event signal is canceled by applying the flicker signal to the buffer bias signal line BA1. In a 16th embodiment, a pixel array unit is stacked, a light receiving unit of each pixel is provided in an upper layer, and a circuit unit is provided in a lower layer.

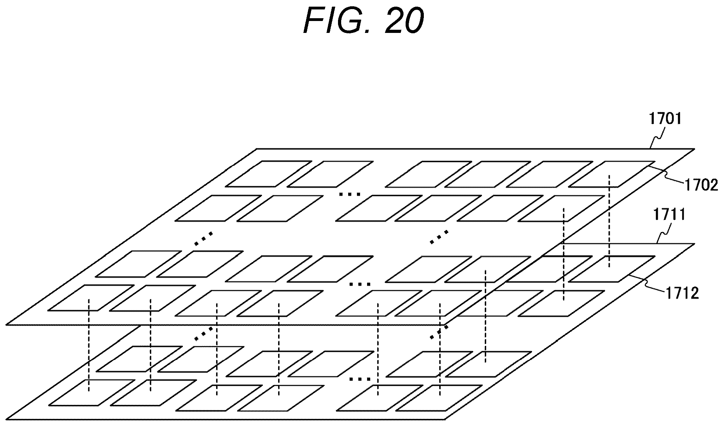

Fig. 20 is a perspective view illustrating a configuration example of pixels of a pixel array unit according to the 16th embodiment.

In the drawing, the pixel array unit includes a light receiving array portion 1701 and a circuit array portion 1711. The light receiving array portion 1701 can be stacked on the circuit array portion 1711. The light receiving array portion 1701 includes light receiving parts 1702. The light receiving parts 1702 are arranged in a matrix in the row direction and the column direction. The light receiving part 1702 can be provided with a photoelectric conversion unit 261 and a logarithmic conversion unit 262.

The circuit array portion 1711 includes circuit parts 1712. The circuit parts 1712 are arranged in a matrix in the row direction and the column direction. The circuit part 1712 is connected to the light receiving part 1702. The circuit part 1712 can be provided for each light receiving part 1702. At this time, the circuit part 1712 can be arranged immediately below the light receiving part 1702. The circuit part 1712 can be provided with a buffer 263, a differentiator 264, and a comparator 265.

The light receiving array portion 1701 can be formed in an upper layer chip, and the circuit array portion 1711 can be formed in a lower layer chip. At this time, the upper layer chip and the lower layer chip may be directly bonded to each other. In the direct bonding of the upper layer chip and the lower layer chip, hybrid bonding can be used. At this time, the upper layer chip and the lower layer chip may be electrically connected to each other on the basis of Cu-Cu connection. A material of semiconductor substrates used for the upper layer chip and the lower layer chip may be Si, InGaAs, or InP.

Thus, in the 16th embodiment described above, the light receiving array unit 1701 and the circuit array unit 1711 are stacked. As a result, it is possible to increase the area of the light receiving parts 1702 while suppressing an increase in chip size, and it is possible to improve sensitivity while downsizing the solid-state imaging device.

### <9. Application example to mobile body>

The technology according to the present disclosure (the present technology) is applicable to various products. For example, the technology according to the present disclosure may also be implemented as a device mounted on any type of mobile body such as an automobile, an electric automobile, a hybrid electric automobile, a motorcycle, a bicycle, a personal mobility, an airplane, a drone, a ship, and a robot.

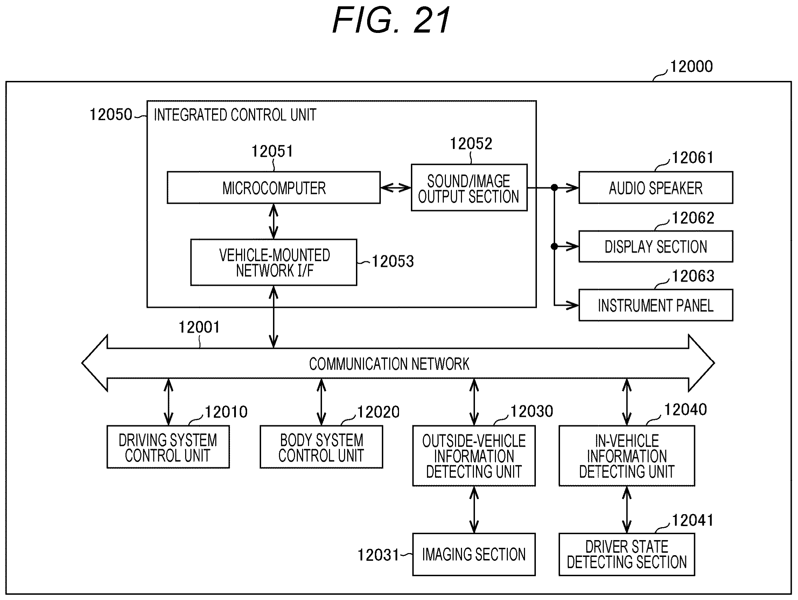

Fig. 21 is a block diagram illustrating an example of a schematic configuration of a vehicle control system that is an example of a mobile body control system to which the technology according to the present disclosure can be applied.

The vehicle control system 12000 includes a plurality of electronic control units connected to each other via a communication network 12001. In the example illustrated in Fig. 21, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. Furthermore, the light received by the imaging section 12031 may be visible light, or may be invisible light such as infrared rays.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle to travel automatedly without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of Fig. 21, an audio speaker 12061, a display section 12062, and an instrument panel 12063 are illustrated as the output device. The display section 12062 may, for example, include at least one of an on-board display and a head-up display.

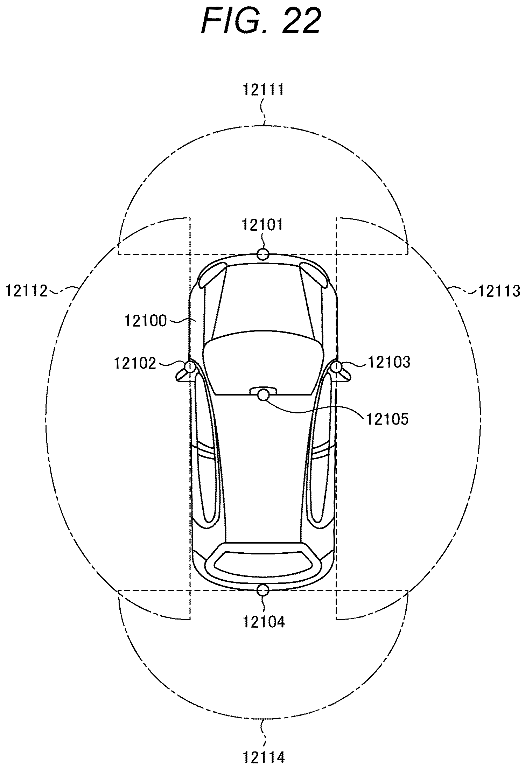

Fig. 22 is a diagram illustrating an example of an installation position of the imaging section 12031.

In Fig. 22, the imaging section 12031 includes imaging sections 12101, 12102, 12103, 12104, and 12105.

The imaging sections 12101, 12102, 12103, 12104, and 12105 are, for example, disposed at positions on a front nose, sideview mirrors, a rear bumper, and a back door of the vehicle 12100 as well as a position on an upper portion of a windshield within the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Note that Fig. 22 illustrates an example of imaging ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

An example of the vehicle control system to which the technology according to the present disclosure can be applied has been described above. The technology according to the present disclosure can be applied to the imaging section 12031 among the configurations described above. Specifically, for example, the above-described solid-state imaging device 102 can be applied to the imaging section 12031. By applying the technology according to the present disclosure to the vehicle control system 12000, it is possible to prevent the flicker from being detected as an event while preventing the disappearance of the event to be detected.

Note that in the above-described embodiments, the flicker signal is taken as an example of the noise signal to be removed from the event signal. The noise signal to be removed from the event signal is not necessarily limited to the flicker signal, and may be other than the flicker signal as long as the noise signal is periodic noise depending on the light source.

Furthermore, the embodiments described above show examples for embodying the present technology, and the respective matters in the embodiments and the respective matters specifying the invention in the claims have correspondence relationships. Similarly, the respective matters specifying the invention in the claims and the respective matters with the same names in the embodiments of the present technology have correspondence relationships. The present technology, however, is not limited to the embodiments, and can be implemented by making various modifications to the embodiments without departing from the scope of the present technology. Furthermore, effects described in the present specification are merely examples and not limited, and other effects may be provided.

Note that the present technology may also have the following configurations.
(1) An imaging device including
   a signal detection unit that detects a first pixel signal, and
   an event detection unit that detects an event signal on the basis of the first pixel signal and a second pixel signal.
(2) The imaging device according to (1), further including
   a noise detection unit that detects noise on the basis of the first pixel signal, and
   a noise removal unit that removes the noise detected by the noise detection unit from the event signal.
(3) The imaging device according to (2), in which
   the noise detection unit includes a flicker detection unit that detects a flicker signal on the basis of the first pixel signal, and
   the noise removal unit includes a flicker removal unit that removes the flicker signal detected by the flicker detection unit from the event signal.
(4) The imaging device according to (3), further including
   a bias generation unit that generates a bias signal used to detect the event signal.
(5) The imaging device according to (4), in which:
   the signal detection unit includes a monitor pixel that outputs the flicker signal;
   the event detection unit includes an event pixel that outputs the event signal on the basis of the bias signal; and
   the flicker removal unit cancels a flicker signal included in the event signal on the basis of the flicker signal output from the monitor pixel.
(6) The imaging device according to (5), in which
   the flicker removal unit applies a flicker signal output from the monitor pixel to a buffer bias signal line used for buffering the second pixel signal, and cancels the flicker signal included in the event signal.
(7) The imaging device according to (5), in which
   the flicker removal unit applies a flicker signal output from the monitor pixel to a logarithmic bias signal line used for logarithmic conversion of the second pixel signal, and cancels the flicker signal included in the event signal.
(8) The imaging device according to (5), in which
   the flicker removal unit applies a flicker signal output from the monitor pixel to a differential bias signal line used for differentiation of the second pixel signal, and cancels the flicker signal included in the event signal.
(9) The imaging device according to (5), in which
   the flicker removal unit applies a flicker signal output from the monitor pixel to a current mirror bias signal line used for generating the bias signal, and cancels the flicker signal included in the event signal.
(10) The imaging device according to (5), in which
   the flicker removal unit controls a current used for generating the bias signal on the basis of the flicker signal output from the monitor pixel, and cancels the flicker signal included in the event signal.
(11) The imaging device according to (5), in which
   the flicker removal unit
   includes a logarithmic conversion unit that logarithmically converts a current, and
   controls the current on the basis of a flicker signal output from the monitor pixel, and cancels the flicker signal included in the event signal.
(12) The imaging device according to any one of (5) to (11), further including
   a buffer connected to a subsequent stage of the monitor pixel.
(13) The imaging device according to any one of (5) to (12), further including
   a pixel array unit in which the event pixels are arranged in an array, in which
   the bias generation unit includes a plurality of bias generation units corresponding to a plurality of areas into which the pixel array unit is divided, and
   the flicker removal unit includes a plurality of flicker removal units corresponding to the plurality of bias generation units.
(14) The imaging device according to (5), in which
   the flicker removal unit applies a flicker signal output from the monitor pixel to different bias signal lines used for detecting the event signal, and cancels the flicker signal included in the event signal.
(15) The imaging device according to any one of (5) to (14), in which
   the event pixel includes:
   a photoelectric conversion unit;
   a logarithmic conversion unit that logarithmically converts an output of the photoelectric conversion unit;
   a buffer that delivers an output of the logarithmic conversion unit;
   a differentiator that differentiates an output of the logarithmic conversion unit transferred via the buffer; and
   a comparator that compares an output of the differentiator.
(16) The imaging device according to (15), in which
   an output of the monitor pixel is an added value of outputs of logarithmic conversion units of a plurality of photoelectric conversion units.
(17) The imaging device according to (15), in which
   an output of the monitor pixel is an added value of outputs of buffers of a plurality of photoelectric conversion units.
(18) The imaging device according to any one of (5) to (17), further including
   a photoelectric conversion unit shared by the monitor pixel and the event pixel, and
   a switching unit that switches whether the photoelectric conversion unit is used for the monitor pixel or the event pixel.
(19) The imaging device according to any one of (5) to (18), in which
   the event pixel is used as the monitor pixel.
(20) An imaging method including
   detecting a first pixel signal, and
   detecting an event signal on the basis of the first pixel signal and a second pixel signal.

### REFERENCE SIGNS LIST

- 100: Imaging device
- 101: Optical system
- 102: Solid-state imaging device
- 103: Imaging control unit
- 104: Image processing unit
- 105: Storage unit
- 106: Display unit
- 107: Operation unit
- 108: Bus
- 111: Pixel array unit
- 113: Event signal output unit
- 115: Access control unit
- 116: Timing control unit
- 117: Event signal processing unit
- 118: Bias generation unit
- 119: Anti-flicker unit
- 120: Monitor pixel
- 121: Event pixel
- 122: Vertical signal line
- 123: Horizontal control line

## Claims

1. An imaging device comprising
a signal detection unit that detects a first pixel signal, and
an event detection unit that detects an event signal on a basis of the first pixel signal and a second pixel signal.

2. The imaging device according to claim 1, further comprising:
a noise detection unit that detects noise on a basis of the first pixel signal, and
a noise removal unit that removes the noise detected by the noise detection unit from the event signal.

3. The imaging device according to claim 2, wherein:
the noise detection unit includes a flicker detection unit that detects a flicker signal on a basis of the first pixel signal, and
the noise removal unit includes a flicker removal unit that removes the flicker signal detected by the flicker detection unit from the event signal.

4. The imaging device according to claim 3, further comprising
a bias generation unit that generates a bias signal used to detect the event signal.

5. The imaging device according to claim 4, wherein:
the signal detection unit includes a monitor pixel that outputs the flicker signal;
the event detection unit includes an event pixel that outputs the event signal on a basis of the bias signal; and
the flicker removal unit cancels a flicker signal included in the event signal on a basis of the flicker signal output from the monitor pixel.

6. The imaging device according to claim 5, wherein
the flicker removal unit applies a flicker signal output from the monitor pixel to a buffer bias signal line used for buffering the second pixel signal, and cancels the flicker signal included in the event signal.

7. The imaging device according to claim 5, wherein
the flicker removal unit applies a flicker signal output from the monitor pixel to a logarithmic bias signal line used for logarithmic conversion of the second pixel signal, and cancels the flicker signal included in the event signal.

8. The imaging device according to claim 5, wherein
the flicker removal unit applies a flicker signal output from the monitor pixel to a differential bias signal line used for differentiation of the second pixel signal, and cancels the flicker signal included in the event signal.

9. The imaging device according to claim 5, wherein
the flicker removal unit applies a flicker signal output from the monitor pixel to a current mirror bias signal line used for generating the bias signal, and cancels the flicker signal included in the event signal.

10. The imaging device according to claim 5, wherein
the flicker removal unit controls a current used for generating the bias signal on a basis of the flicker signal output from the monitor pixel, and cancels the flicker signal included in the event signal.

11. The imaging device according to claim 5, wherein
the flicker removal unit includes a logarithmic conversion unit that logarithmically converts a current, and
controls the current on a basis of a flicker signal output from the monitor pixel, and cancels the flicker signal included in the event signal.

12. The imaging device according to claim 5, further comprising
a buffer connected to a subsequent stage of the monitor pixel.

13. The imaging device according to claim 5, further comprising
a pixel array unit in which the event pixels are arranged in an array, wherein
the bias generation unit includes a plurality of bias generation units corresponding to a plurality of areas into which the pixel array unit is divided, and
the flicker removal unit includes a plurality of flicker removal units corresponding to the plurality of bias generation units.

14. The imaging device according to claim 5, wherein
the flicker removal unit applies a flicker signal output from the monitor pixel to different bias signal lines used for detecting the event signal, and cancels the flicker signal included in the event signal.

15. The imaging device according to claim 5, wherein
the event pixel includes:
a photoelectric conversion unit;
a logarithmic conversion unit that logarithmically converts an output of the photoelectric conversion unit;
a buffer that delivers an output of the logarithmic conversion unit;
a differentiator that differentiates an output of the logarithmic conversion unit transferred via the buffer; and
a comparator that compares an output of the differentiator.

16. The imaging device according to claim 15, wherein
an output of the monitor pixel is an added value of outputs of logarithmic conversion units of a plurality of photoelectric conversion units.

17. The imaging device according to claim 15, wherein
an output of the monitor pixel is an added value of outputs of buffers of a plurality of photoelectric conversion units.

18. The imaging device according to claim 5, further comprising
a photoelectric conversion unit shared by the monitor pixel and the event pixel, and
a switching unit that switches whether the photoelectric conversion unit is used for the monitor pixel or the event pixel.

19. The imaging device according to claim 5, wherein
the event pixel is used as the monitor pixel.

20. An imaging method comprising
detecting a first pixel signal, and
detecting an event signal on a basis of the first pixel signal and a second pixel signal.
